(19) Europäisches Patentamt
European Patent Office
Office européen des brevets

(11) EP 2 948 959 B1

(12) FASCICULE DE BREVET EUROPEEN

(45) Date de publication et mention
de la délivrance du brevet:
08.03.2017 Bulletin 2017/10

(51) Int Cl.:
G21D 1/00 (2006.01)          G21D 3/04 (2006.01)
E02B 5/00 (2006.01)          E02B 5/08 (2006.01)
E21D 9/14 (2006.01)

(21) Numéro de dépôt: 14705837.4

(22) Date de dépôt: 22.01.2014

(86) Numéro de dépôt international:
PCT/FR2014/050123

(87) Numéro de publication internationale:
WO 2014/114882 (31.07.2014 Gazette 2014/31)

(54) **INSTALLATION D'AMENÉE D'EAU POUR LE REFROIDISSEMENT D'UNE CENTRALE NUCLÉAIRE, ET CENTRALE NUCLÉAIRE COMPRENANT UNE TELLE INSTALLATION**

VORRICHTUNG ZUR WASSERZUFUHR ZUM KÜHLEN EINES KERNKRAFTWERKS SOWIE KERNKRAFTWERK MIT SOLCH EINER VORRICHTUNG

APPARATUS FOR SUPPLYING WATER FOR COOLING A NUCLEAR POWER STATION, AND NUCLEAR POWER STATION COMPRISING SUCH AN APPARATUS

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: 25.01.2013 FR 1350674

(43) Date de publication de la demande:
02.12.2015 Bulletin 2015/49

(73) Titulaire: Electricité de France
75008 Paris (FR)

(72) Inventeur: LEGENDRE, Christophe
F-50690 Virandeville (FR)

(74) Mandataire: Cabinet Plasseraud
66 rue de la Chaussée d'Antin
75440 Paris Cedex 09 (FR)

(56) Documents cités:
CH-A- 517 352          DE-A1- 2 559 305
JP-A- S5 746 197       JP-A- 2000 170 138

## Description

La présente invention se rapporte à une installation d'amenée d'eau pour au moins un circuit de refroidissement à échangeur de chaleur, comprenant un bassin d'aspiration alimenté en eau et à partir duquel au moins une station de pompage de la centrale aspire de l'eau pour la faire circuler dans un dit circuit de refroidissement, et comprenant en outre au moins un tunnel d'aspiration relié à au moins une entrée d'eau principale immergée dans une étendue d'eau telle qu'une mer, un lac ou un fleuve, ledit tunnel d'aspiration alimentant en eau le bassin d'aspiration de façon à maintenir un niveau d'eau suffisant dans le bassin d'aspiration pour le fonctionnement de la station de pompage.

Le circuit de refroidissement à échangeur de chaleur est typiquement destiné à refroidir la vapeur d'eau en sortie d'une turbine d'alternateur dans un circuit secondaire d'un réacteur de la centrale nucléaire, de façon à condenser cette vapeur pour que l'eau revenue à l'état liquide soit réinjectée dans des générateurs de vapeur du circuit secondaire. Les générateurs de vapeur permettent le refroidissement d'un circuit primaire à fluide pressurisé pour refroidir le réacteur, en réalisant un échange thermique entre le circuit primaire et le circuit secondaire. Sur le plan fluidique, les circuits primaire et secondaire sont fermés, tandis que le circuit de refroidissement à échangeur de chaleur est ouvert et est complètement isolé du circuit secondaire qui est lui-même complètement isolé du circuit primaire. L'eau en sortie d'un échangeur de chaleur ne présente donc pas de radioactivité, et peut être évacuée par exemple pour retourner dans l'étendue d'eau qui alimente le circuit.

Une installation d'amenée d'eau telle que définie ci-dessus est connue notamment de la centrale nucléaire de Seabrook, construite à proximité d'un bord de mer dans le sud du New Hampshire (USA) et mise en service en 1990. L'installation comprend un unique tunnel d'aspiration de plusieurs kilomètres de long raccordé à trois puits d'aspiration verticaux. Chaque puits d'aspiration débouche au-dessus du fond marin à environ une quinzaine de mètres sous le niveau moyen de la mer, et comprend une partie supérieure formant une des dites entrées d'eau immergées.

On connait également de la demande de brevet japonais publiée le 17.06.1985 sous le n° JP60111089A une installation d'amenée d'eau comprenant un bassin d'aspiration alimenté en eau par un tunnel d'aspiration souterrain, le tunnel étant relié à une entrée d'eau immergée dans la mer à une relativement faible profondeur. L'entrée d'eau peut se trouver à découvert avant une vague d'un tsunami.

On connaît aussi le document JP2000170138A qui divulgue une installation d'amenée d'eau selon le préambule de la revendication 1.

Ces installations d'amenée d'eau connues ne sont pas prévues pour faire face à la situation bien que peu probable d'un effondrement critique dans le tunnel d'aspiration, qui entraînerait une obstruction quasi-totale du tunnel, avec pour conséquence une quasi interruption de l'alimentation en eau du bassin d'aspiration et le risque d'une insuffisance d'eau pour alimenter des pompes de fonctionnement de sauvegarde de la station de pompage de la centrale. Les pompes de fonctionnement de sauvegarde sont typiquement des pompes supplétives des pompes de fonctionnement de production d'une station de pompage, et sont prévues pour fournir un débit d'eau réduit au(x) circuit(s) de refroidissement à échangeur de chaleur quand les pompes de fonctionnement de production sont arrêtées. Elles sont destinées à assurer le refroidissement du ou des réacteurs nucléaires une fois ceux-ci arrêtés pour une plus ou moins longue période.

Même à supposer un dédoublement du tunnel d'aspiration, l'hypothèse d'un effondrement critique dans les deux tunnels d'aspiration, entraînant une quasi interruption de l'alimentation en eau du bassin d'aspiration et donc de l'alimentation de la station de pompage, ne doit pas être négligée en particulier dans des régions où les risques sismiques sont relativement importants. Par ailleurs, l'alimentation en eau du bassin d'aspiration par un tunnel relié à une entrée d'eau immergée dans la mer peut avoir pour avantage d'abaisser significativement la température maximale de l'eau dans le bassin d'aspiration par rapport à la température maximale de l'eau à la surface de la mer, la baisse de la température étant liée principalement à la profondeur à laquelle l'entrée d'eau est disposée sous le niveau moyen de la mer. L'ajout d'un deuxième tunnel d'aspiration en supplément d'un premier tunnel d'aspiration, en vue de limiter les risques d'interruption de l'alimentation en eau du bassin d'aspiration en cas d'effondrement critique dans le premier tunnel, implique de disposer les nouvelles entrées d'eau au moins sensiblement à la même profondeur que les premières entrées d'eau, afin de ne pas réchauffer significativement l'eau dans le bassin d'aspiration.

Un réchauffement de l'eau dans le bassin d'aspiration a en effet pour conséquence une diminution du rendement η d'un circuit secondaire de la centrale. Le rendement dépend de la température Tf de la source froide, c'est à dire la température de l'eau à l'entrée des échangeurs de chaleur, et se définit comme suit :

$$\eta = (Tc - Tf)/Tc$$

Tc étant la température de la source chaude, c'est à dire la température de l'eau à la sortie des échangeurs de chaleur. Le rendement η augmente donc avec la diminution de la température Tf de la source froide.

En fonction de la topologie sous-marine, la longueur nécessaire d'un tunnel d'aspiration augmente généralement avec la profondeur à laquelle sont disposées les entrées d'eau. De plus, outre le coût de la construction d'un tunnel d'aspiration supplémentaire, le risque d'un effondrement critique dans le tunnel augmente aussi généralement avec la longueur du tunnel, en particulier dans des régions à risque sismique important. Par conséquent, la solution d'un tunnel d'aspiration supplémentaire pour sécuriser l'alimentation en eau du bassin d'aspiration n'est pas complètement satisfaisante, soit à cause d'une baisse du rendement des circuits secondaires de la centrale dans le cas d'une faible profondeur des entrées d'eau supplémentaires, soit en termes de coût et/ou de sécurité dans le cas d'entrées d'eau supplémentaires plus profondes.

La présente invention vise à proposer une installation d'amenée d'eau dans laquelle en cas d'effondrement critique dans le ou les tunnels d'aspiration alimentant le bassin d'aspiration, l'alimentation en eau du bassin d'aspiration reste assurée au moins pour alimenter des pompes de fonctionnement de sauvegarde de la station de pompage de la centrale, cette installation ne devant pas pénaliser le rendement d'un circuit secondaire de la centrale lors du fonctionnement en production de la centrale c'est-à-dire avec une alimentation normale du bassin d'aspiration par le ou les tunnels d'aspiration.

A cet effet, l'invention a pour objet une installation d'amenée d'eau telle que définie en préambule ci-dessus, caractérisée en ce qu'elle comprend en outre un système d'amenée d'eau additionnelle distinct dudit au moins un tunnel d'aspiration et apte à amener de l'eau dans le bassin d'aspiration à partir d'au moins une réserve d'eau de secours, ledit système d'amenée d'eau additionnelle comprenant au moins un passage d'eau reliant le bassin d'aspiration à une dite réserve d'eau de secours et un dispositif d'obturation fermant ledit passage d'eau, le dispositif d'obturation étant apte à ouvrir au moins partiellement ledit passage d'eau si le niveau d'eau dans le bassin d'aspiration descend d'une façon prédéterminée comme anormale, afin que le bassin d'aspiration soit alimenté en eau par ledit système d'amenée d'eau additionnelle si l'alimentation en eau par ledit au moins un tunnel d'aspiration devient insuffisante.

Grâce à ces dispositions, l'eau du bassin d'aspiration ne se mélange généralement pas à l'eau d'une réserve d'eau de secours lors du fonctionnement en production de la centrale, par conséquent le rendement d'un circuit secondaire de la centrale n'est pas affecté par la présence d'une réserve d'eau de secours. L'utilisation d'une réserve d'eau de secours n'est déclenchée que si le niveau d'eau dans le bassin d'aspiration descend d'une façon prédéterminée comme anormale. Une baisse du niveau d'eau prédéterminée comme anormale correspondra généralement à un effondrement critique dans le ou les tunnels d'aspiration, entraînant de façon durable une quasi interruption ou pour le moins une forte diminution de l'alimentation en eau du bassin d'aspiration. Néanmoins, une telle baisse du niveau d'eau peut également correspondre à une baisse exceptionnelle de l'étendue d'eau sur une période relativement courte, comme cela peut se produire par exemple en bord de mer dans certaines régions sujettes à des tsunamis. L'invention trouve donc également une application dans des installations d'amenée d'eau pour des centrales nucléaires en bord de mer où la mer peut être amenée très exceptionnellement à se retirer en dessous du niveau de la marée la plus basse, comme c'est parfois le cas avant une première vague d'un tsunami.

Selon un mode de réalisation avantageux d'une installation d'amenée d'eau selon l'invention, ladite étendue d'eau constitue une dite réserve d'eau de secours. De cette façon, l'alimentation en eau du bassin d'aspiration par ledit système d'amenée d'eau additionnelle peut être assurée pour une période illimitée, et sans nécessiter des moyens de pompage pour maintenir le niveau de l'eau dans la réserve d'eau de secours.

Dans d'autres modes de réalisation préférés d'une installation d'amenée d'eau selon l'invention, on a recours notamment à l'une ou l'autre des dispositions suivantes :

ladite étendue d'eau est une mer, et ledit système d'amenée d'eau additionnelle est disposé entre le bassin d'aspiration et une partie d'un chenal qui communique avec la mer ;

ledit système d'amenée d'eau additionnelle comprend un tunnel de secours relié à au moins une entrée d'eau de secours immergée dans ladite étendue d'eau, ladite entrée d'eau de secours étant disposée à une hauteur d'au moins dix mètres au dessus d'une dite entrée d'eau principale ;

une dite réserve d'eau de secours comprend un bassin de réserve contenant un volume d'eau qui reste substantiellement inchangé pendant une alimentation normale en eau du bassin d'aspiration par ledit au moins un tunnel d'aspiration ;

ladite au moins une entrée d'eau principale est disposée à une certaine profondeur par rapport à un niveau moyen de référence de ladite étendue d'eau, ladite profondeur étant déterminée de façon à ce que l'eau arrivant dans le bassin d'aspiration ait pendant au moins une période de l'année une température maximale inférieure d'au moins 4°C par rapport à une température maximale de l'eau à la surface de ladite étendue d'eau ;

ledit dispositif d'obturation comprend un organe d'obturation apte à pivoter par rapport à un axe pivot afin d'ouvrir ledit passage d'eau ;

ledit dispositif d'obturation est adapté de façon à ce qu'un pivotement dudit organe d'obturation s'opère de façon autonome en fonction d'une baisse du niveau d'eau dans le bassin d'aspiration ;

un pivotement dudit organe d'obturation est actionné par un dispositif de déclenchement relié à un système de commande apte à générer une commande de déclenchement à destination du dispositif de déclenchement, le système de commande étant associé à un système d'analyse recevant des données fournies par un dispositif de mesure du niveau d'eau dans le bassin d'aspiration, ledit système d'analyse étant apte à déterminer si le niveau d'eau dans le bassin d'aspiration descend d'une façon prédéterminée comme anormale ;
ledit dispositif de déclenchement est adapté pour laisser le pivotement dudit organe d'obturation être opéré de façon autonome par ledit dispositif d'obturation en cas de non fonctionnement du dispositif de déclenchement :

ledit organe d'obturation pivote pour ouvrir ledit passage d'eau lorsque une différence de hauteur entre le niveau d'eau dans la réserve d'eau de secours et le niveau d'eau dans le bassin d'aspiration dépasse un seuil prédéterminé ;
ledit dispositif d'obturation comprend un dispositif de contrepoids disposé sur un côté opposé à l'organe d'obturation par rapport audit axe pivot, ledit dispositif de contrepoids comprend un organe de contrepoids principal situé à une distance fixe dudit axe pivot, et ledit organe de contrepoids principal pèse entre 80% et 200% du poids dudit organe d'obturation ;
ledit dispositif d'obturation comprend un dispositif de flotteur disposé de façon à être complètement immergé dans l'eau pendant une alimentation normale en eau par ledit au moins un tunnel d'aspiration et à émerger au moins en partie si le niveau d'eau dans le bassin d'aspiration descend en dessous d'un niveau prédéterminé de plus basse marée jusqu'à atteindre un niveau prédéterminé de déclenchement, ledit dispositif de flotteur étant adapté pour provoquer un pivotement dudit organe d'obturation une fois que ledit niveau de déclenchement est atteint.

L'invention a également pour objet une centrale nucléaire comprenant une installation d'amenée d'eau selon l'invention, dans laquelle le bassin d'aspiration est couvert par un dispositif formant un couvercle essentiellement étanche à l'eau, et au moins une ouverture calibrée est réalisée dans le dispositif formant un couvercle ou à proximité, de façon à laisser passer un flux d'eau limité vers l'extérieur du bassin d'aspiration en cas de débordement du bassin d'aspiration dû à une montée des eaux inhabituelle de ladite étendue d'eau, la centrale nucléaire comprenant en outre au moins un puits de rejet alimentant en eau un tunnel de rejet, ledit puits de rejet étant également muni d'un dispositif formant un couvercle avec au moins une ouverture calibrée de façon à laisser passer un flux d'eau limité vers l'extérieur en cas de débordement du puits de rejet.
Selon un mode de réalisation avantageux d'une telle centrale nucléaire, une dite réserve d'eau de secours comprend un bassin de réserve ouvert par le haut sur l'extérieur et contenant un volume d'eau qui reste substantiellement inchangé pendant une alimentation normale en eau du bassin d'aspiration par ledit au moins un tunnel d'aspiration, et au moins une dite ouverture calibrée aboutit dans ledit bassin de réserve de façon à y recueillir ledit flux d'eau limité.
D'autres caractéristiques et avantages de l'invention ressortent dans ce qui va suivre de la description d'exemples non limitatifs de modes de réalisation, en référence aux figures dans lesquelles :

La FIG.1 représente schématiquement une vue de dessus d'une centrale nucléaire en bord de mer, comprenant une installation d'amenée d'eau susceptible d'être modifiée pour être équipée d'un système d'amenée d'eau additionnelle.

La FIG.2 représente schématiquement une vue partielle de côté de l'installation d'amenée d'eau représentée sur la FIG.1 ainsi que des différents niveaux de marée à prendre en compte pour la conception.

La FIG.3 représente schématiquement une vue de dessus de la centrale nucléaire de la FIG.1, dans une situation de fonctionnement très dégradé du tunnel d'aspiration suite à un effondrement, cette situation ne permettant pas de poursuivre une exploitation normale de la centrale nucléaire.

La FIG.4 représente schématiquement une vue partielle de côté de modifications apportées à l'installation d'amenée d'eau de la FIG.1 pour réaliser un système d'amenée d'eau additionnelle selon l'invention, le dispositif d'obturation du système d'amenée d'eau étant représenté dans une position de fermeture du passage d'eau.

La FIG.5 représente le système d'amenée d'eau additionnelle de la FIG.4 avec le dispositif d'obturation dans une position d'ouverture du passage d'eau pour faire communiquer le bassin d'aspiration avec un chenal.

La FIG.6 représente schématiquement une vue partielle de dessus du système d'amenée d'eau additionnelle de la FIG.4.

La FIG.7 représente schématiquement une vue partielle de dessus du système d'amenée d'eau additionnelle de la FIG.4, avec le dispositif d'obturation dans la position d'ouverture de la FIG.5.

La FIG.8 représente schématiquement une vue partielle de côté d'une partie du dispositif d'obturation de la FIG.4.

La FIG.9 représente schématiquement une vue partielle de côté du dispositif d'obturation de la FIG.8 complété par un dispositif de réglage de contrepoids.

La FIG.10 représente schématiquement une vue partielle de côté d'un dispositif d'obturation analogue à celui de la FIG.9.

La FIG.11 représente schématiquement une vue partielle de côté d'un autre mode de réalisation d'un système d'amenée d'eau additionnelle selon l'invention, pouvant être utilisé comme une alternative au système d'amenée d'eau additionnelle de la FIG.4.

La FIG.12 représente le système d'amenée d'eau additionnelle de la FIG.11 avec le dispositif d'obturation dans une position d'ouverture complète du passage d'eau.

La FIG.13 représente schématiquement une vue partielle de côté d'une variante du système d'amenée d'eau additionnelle de la FIG.11, avec le dispositif d'obturation dans une position de fermeture du passage d'eau.

La FIG.14 représente schématiquement le système d'amenée d'eau additionnelle de la FIG.13 avec le dispositif d'obturation dans la position d'ouverture complète du passage d'eau.

La FIG.15 représente schématiquement une vue partielle de côté d'une autre variante d'un système d'amenée d'eau additionnelle analogue à celui de la FIG.11 avec un dispositif d'obturation selon un autre mode de réalisation.

La FIG.16 représente le système d'amenée d'eau additionnelle de la FIG.15 avec le dispositif d'obturation dans une position d'ouverture complète du passage d'eau.

La FIG.17 représente schématiquement une vue partielle de côté d'un autre mode de réalisation d'une installation d'amenée d'eau selon l'invention pour une centrale nucléaire susceptible de subir un raz de marée, le dispositif d'obturation du système d'amenée d'eau étant représenté dans une position de fermeture du passage d'eau.

La FIG.18 représente le système d'amenée d'eau additionnelle de la FIG.17, le dispositif d'obturation étant dans une position d'ouverture du passage d'eau pour faire communiquer le bassin d'aspiration avec la mer par l'intermédiaire d'un tunnel de secours.

La FIG.19 représente schématiquement une vue partielle de côté du système d'amenée d'eau additionnelle de la FIG.17, muni d'un dispositif d'obturation selon un autre mode de réalisation.

La FIG.20 représente schématiquement une vue partielle de côté d'un autre mode de réalisation d'une installation d'amenée d'eau selon l'invention, pour une centrale nucléaire en bord de mer susceptible de subir un raz de marée, avec une première réserve d'eau de secours comprenant un bassin de réserve particulièrement destiné à parer à un cas de tsunami.

La FIG.21 représente l'installation d'amenée d'eau de la FIG.20 dans une situation où la mer à côté de la centrale se retire en dessous du niveau de la marée la plus basse avant une première vague d'un tsunami, l'alimentation en eau de pompes de fonctionnement de production pouvant être poursuivie grâce au bassin de réserve.

La FIG.22 représente l'installation d'amenée d'eau de la FIG.20 dans une situation où le niveau de la mer à côté de la centrale atteint un maximum pendant un tsunami.

La FIG.23 représente l'installation d'amenée d'eau de la FIG.20 dans une situation où l'alimentation en eau du bassin d'aspiration par le tunnel d'aspiration est interrompue suite à un effondrement, le bassin d'aspiration étant indirectement alimenté en eau par un tunnel de secours de façon à maintenir en fonctionnement des pompes de fonctionnement de sauvegarde.

La FIG.24 représente schématiquement une partie de l'installation d'amenée d'eau de la FIG.20 dans laquelle sont installés des dispositifs pour déclencher de façon commandée l'ouverture des dispositifs d'obturation du système d'amenée d'eau additionnelle, un des dispositifs de déclenchement étant représenté en action de façon à effectuer un remplissage du bassin de réserve.

La FIG.25 représente schématiquement un autre mode de réalisation de l'installation d'amenée d'eau de la FIG.23, dans une même situation d'interruption de l'alimentation en eau du bassin d'aspiration par le tunnel d'aspiration, le bassin d'aspiration étant directement alimenté en eau par un tunnel de secours.

La FIG.26 représente schématiquement une vue de face d'un mode de réalisation d'un dispositif d'obturation à ouverture exclusivement commandée pouvant être utilisé dans un système d'amenée d'eau de l'installation d'amenée d'eau de la FIG.25, le dispositif d'obturation étant représenté dans une position de fermeture du passage d'eau.

La FIG.27 représente le dispositif d'obturation de la FIG.26 dans une position transitoire d'ouverture du passage d'eau juste après le déclenchement de l'ouverture.

La FIG.28 représente schématiquement une vue partielle de côté du dispositif d'obturation de la FIG.26.

La FIG.29 représente le dispositif d'obturation de la FIG.28 dans une position transitoire d'ouverture du passage d'eau.

La FIG.30 représente schématiquement une vue partielle de côté d'une partie modifiée du dispositif d'obturation de la FIG.26, dans une position de fermeture du passage d'eau ainsi que dans une position transitoire d'ouverture du passage d'eau.

La FIG.31 représente schématiquement et partiellement un autre mode de réalisation d'une installation d'amenée d'eau analogue à celle de la FIG.20, dans laquelle à la fois le bassin de réserve et le bassin d'aspiration sont couverts par un dispositif formant un couvercle.

La FIG.32 représente schématiquement une vue partielle de côté d'un autre mode de réalisation d'une installation d'amenée d'eau selon l'invention pour une centrale nucléaire séparée du bord de mer par une zone littorale non constructible, une réserve d'eau de secours comprenant un bassin de réserve pouvant être alimenté en eau par une source d'eau auxiliaire telle qu'une rivière.

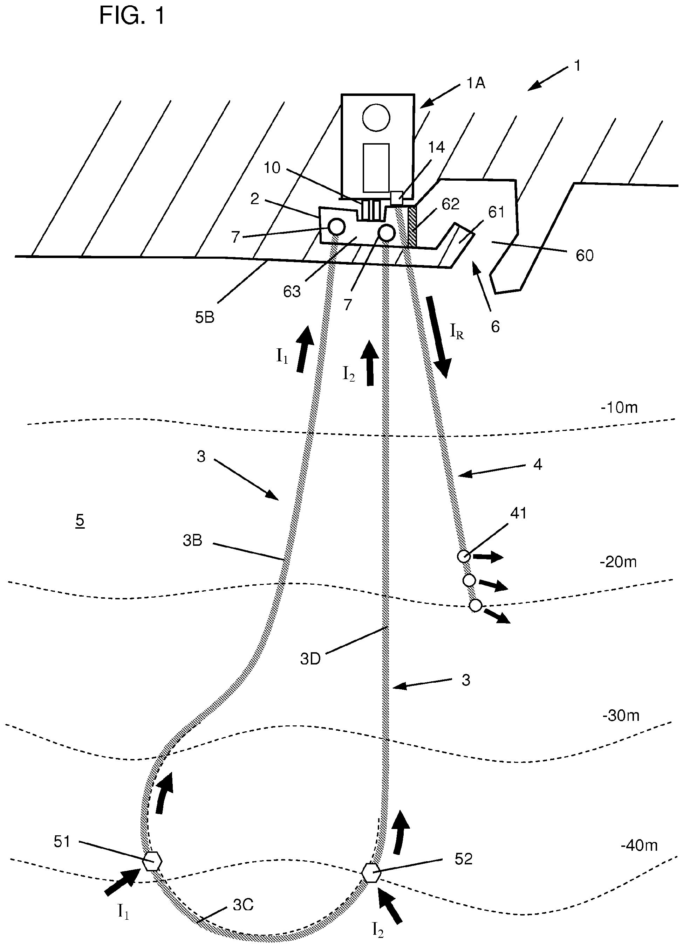

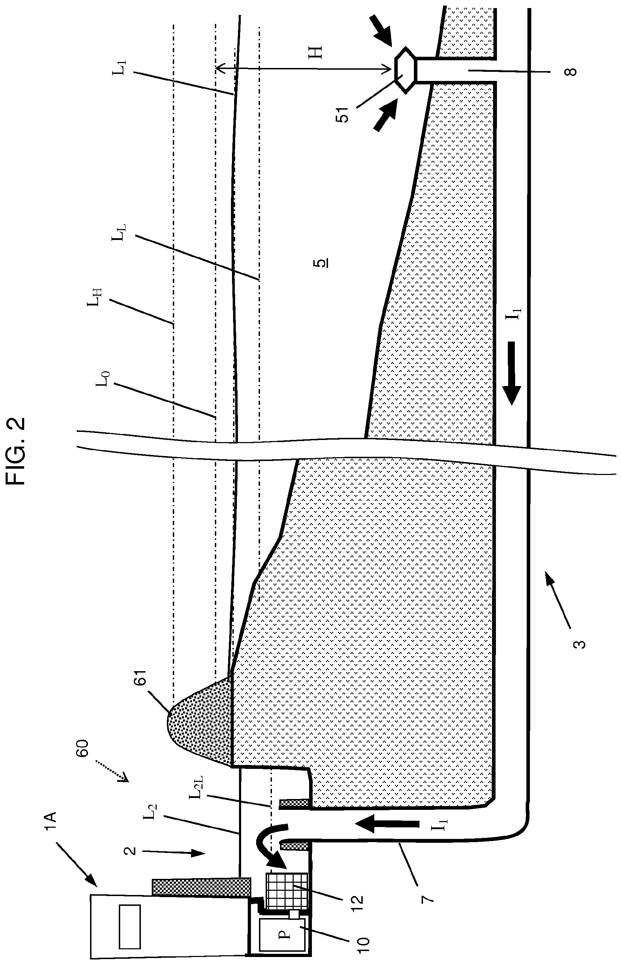

La FIG.1, la FIG.2, et la FIG.3 représentent une même installation d'amenée d'eau et sont commentées conjointement dans ce qui suit. L'installation d'amenée d'eau est réalisée sur le site d'une centrale nucléaire 1 en bord de mer, et comprend un bassin d'aspiration 2 situé dans une partie de fond 63 d'un chenal 6 ainsi qu'un tunnel souterrain d'aspiration 3 qui alimente en eau le bassin d'aspiration. Une station de pompage 10 de la centrale pompe de l'eau dans le bassin d'aspiration 2 pour alimenter au moins un circuit de refroidissement à échangeur de chaleur de la centrale. Le tunnel souterrain 3 communique avec le bassin d'aspiration 2 par l'intermédiaire de deux puits réalisés chacun par un conduit 7 généralement vertical qui débouche dans le fond 2B du bassin 2, comme représenté sur la FIG.2.

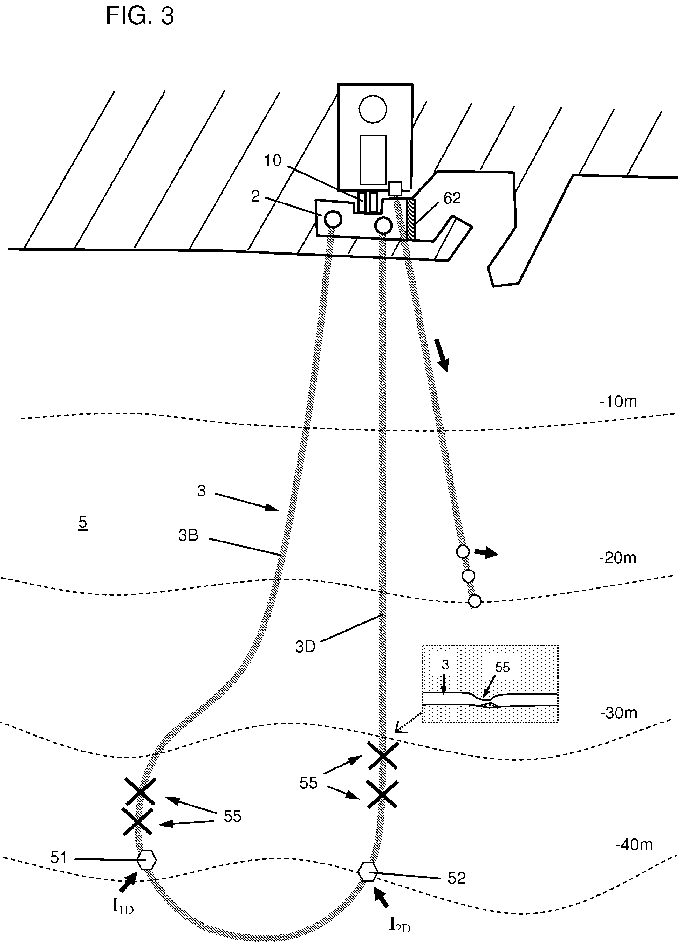

Le tunnel souterrain d'aspiration 3 est rendu visible sur les figures 1 et 3 pour les besoins de l'explication, mais il est entendu que ce tunnel est enterré sous le fond marin et n'est donc pas visible depuis la mer. Le tunnel 3 s'étend jusqu'à une certaine distance du bord de mer, de façon à passer sous des fonds atteignant une profondeur prédéterminée par rapport au niveau zéro de la mer (niveau NGF en France) en fonction d'une température maximale que l'on souhaite ne pas dépasser pour l'eau dans le bassin d'aspiration. Dans l'exemple de réalisation représenté sur la FIG.1, le tunnel d'aspiration 3 passe sous des fonds marins atteignant une profondeur de l'ordre de 40 mètres par rapport au niveau zéro de la mer, et est relié à deux entrées d'eau 51 et 52 distantes l'une de l'autre.

Chaque entrée d'eau 51 et 52 est immergée quelques mètres au dessus du fond marin à une profondeur H par rapport au niveau zéro $L_0$ de la mer, et est située au niveau d'une extrémité supérieure d'un puits d'aspiration 8 essentiellement vertical raccordé au tunnel d'aspiration comme représenté sur la FIG.2. L'eau ne se réchauffe quasiment pas dans un tunnel d'aspiration souterrain, par conséquent a température de l'eau arrivant dans le bassin d'aspiration est sensiblement la même que celle de l'eau aspirée au niveau d'une entrée d'eau 51 ou 52. Préférablement, la profondeur H est déterminée de façon à ce que l'eau arrivant dans le bassin d'aspiration 2 ait pendant au moins une période de l'année une température maximale inférieure d'au moins 4°C par rapport à une température maximale de l'eau à la surface de la mer constituant l'étendue d'eau 5.

Dans l'exemple représenté sur la FIG.1, le tunnel d'aspiration 3 forme une boucle ayant un tronçon en courbe 3C formant au moins un demi-cercle, et présente deux extrémités qui communiquent chacune avec le bassin d'aspiration 2 par l'intermédiaire d'un conduit 7 généralement vertical. Les entrées d'eau 51 et 52 permettent au tunnel d'aspirer des flux d'eau respectivement $I_1$ et $I_2$ dont le débit est fonction du débit d'aspiration de la station de pompage 10. Le débit d'aspiration de la station de pompage 10 en fonctionnement normal d'une tranche nucléaire 1A en pleine puissance est par exemple d'environ 70 m3 d'eau par seconde, par conséquent le débit de chaque flux $I_1$ ou $I_2$ est d'environ 35 m3 d'eau par seconde. Le diamètre intérieur du tunnel 3, ainsi que le diamètre intérieur d'un conduit 7 et celui d'un puits d'aspiration 8, est choisi par exemple de l'ordre de 5 mètres, ce qui permet d'assurer un débit de 70 m3 d'eau par seconde dans une seule branche 3B ou 3D du tunnel sans perte de charge substantielle dans la branche saine si l'autre des deux branches est interrompue par un effondrement.

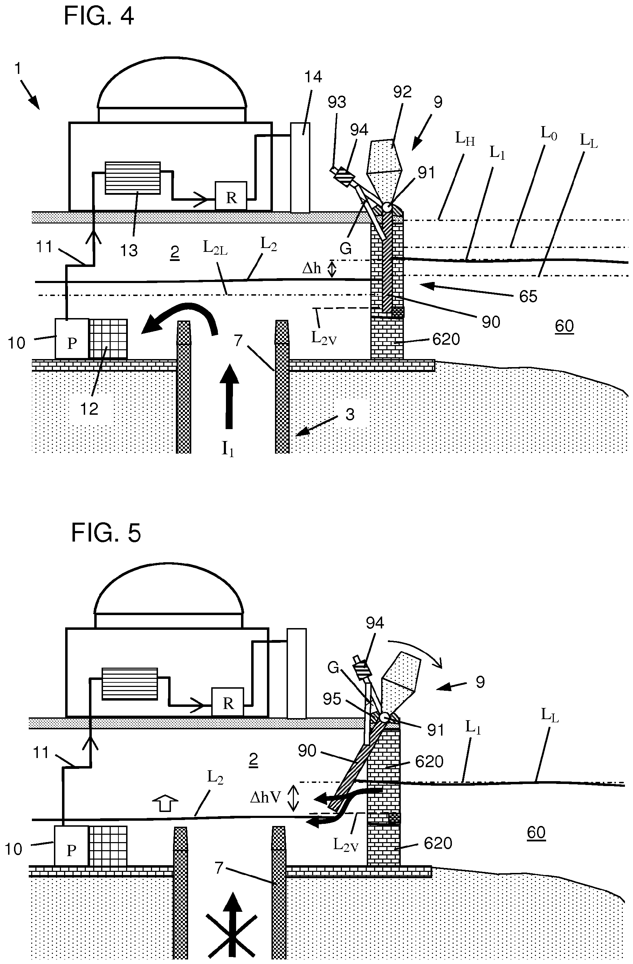

Dans une installation d'amenée d'eau selon l'invention, il n'est pas nécessaire que le tunnel d'aspiration 3 forme une boucle, ou qu'un unique tunnel d'aspiration 3 alimente un bassin d'aspiration 2 de la centrale. Toute autre forme d'un tunnel d'aspiration est envisageable, et un bassin d'aspiration 2 peut être alimenté en eau par deux voire trois tunnels d'aspiration séparés. En particulier, si un même bassin d'aspiration est affecté à des stations de pompages de plusieurs tranches nucléaires d'une centrale, il pourra être décidé pour des raisons de sécurité ou au vu du débit d'eau nécessaire d'alimenter le bassin d'aspiration par deux tunnels d'aspiration 3 en boucle disposés côte à côte. Par ailleurs, une station de pompage comprend de façon connue des pompes R (cf. FIG.4) pour faire circuler l'eau en sortie du circuit de refroidissement 11 à échangeur de chaleur 13 dans un puits de rejet 14 suivi d'un tunnel de rejet 4 qui aboutit à des bouches de sorties sous-marines 41 situées à distance des entrées d'eau 51 et 52. Le débit du flux $I_R$ de l'eau rejetée par le tunnel de rejet 4 est normalement égal à la somme des débits des flux $I_1$ et $I_2$.

Le chenal 6 comprend une partie d'entrée 60 qui communique avec la mer 5, et est protégé de la mer par une digue 61 située entre le chenal et une bordure de mer 5B. Une paroi 62, par exemple sous la forme d'un mur de barrage, réalise une séparation entre la partie de fond 63 et la partie d'entrée 60 du chenal, de façon à ce que l'eau du bassin d'aspiration 2 ne se mélange pas avec l'eau de la partie d'entrée du chenal. De cette façon, l'eau du bassin d'aspiration 2 n'est pas réchauffée par l'eau généralement plus chaude du chenal 6. La paroi 62 ainsi que l'ensemble du tunnel et des puits d'aspiration peuvent avoir été construits dans le cadre de modifications d'une centrale nucléaire déjà en activité dont le bassin d'aspiration est formé à l'origine par le chenal 6, afin d'abaisser la température maximale de l'eau alimentant la station de pompage de la centrale.

Dans le cas peu probable d'un endommagement des deux branches du tunnel d'aspiration 3, par exemple au niveau de zones 55 du tunnel qui subiraient un effondrement critique comme représenté schématiquement sur la FIG.3, il pourrait se produire localement des rétrécissements importants de la section intérieure du tunnel. Des études effectuées par la demanderesse permettent de supposer qu'avec un tunnel comportant des voussoirs de renforcement des parois pouvant se déplacer dans une direction transverse au tunnel, et dans les cas d'effondrement les plus graves envisagés, la section intérieure du tunnel dans les zones endommagées resterait suffisante pour permettre un débit par exemple d'au moins 5 m3 d'eau par seconde et supérieur au débit de sauvegarde requis par les pompes de fonctionnement de sauvegarde de la station de pompage 10. Un débit de sauvegarde de l'ordre de 4 m3 d'eau par seconde est généralement suffisant pour assurer les besoins d'alimentation en eau d'une station de pompage d'une tranche nucléaire dont la production électrique est arrêtée.

Néanmoins, en l'état actuel des études, il n'est pas possible de prédire avec certitude que la section intérieure du tunnel resterait systématiquement suffisante dans tous les cas d'effondrement envisageables. On ne peut donc pas complètement exclure l'éventualité de rétrécissements sévères de la section intérieure du tunnel jusqu'à quasiment interrompre l'alimentation en eau du bassin d'aspiration 2, c'est-à-dire jusqu'à empêcher une alimentation suffisante des pompes de fonctionnement de sauvegarde par l'eau provenant du tunnel d'aspiration. Le cas d'un effondrement critique comme représenté sur la FIG.3 risquerait donc d'entraîner un défaut de refroidissement du réacteur nucléaire de la tranche, même en situation d'arrêt du réacteur. Pour ces raisons, la demanderesse a cherché à concevoir un système d'amenée d'eau additionnelle apte à faire communiquer le bassin d'aspiration avec une réserve d'eau de secours, le système devant permettre que l'alimentation en eau du bassin d'aspiration par la réserve d'eau de secours soit déclenchée de façon infaillible dès lors que le débit d'eau du tunnel d'aspiration devient insuffisant pour alimenter les pompes de fonctionnement de sauvegarde.

Dans ce qui suit, on suppose que l'étendue d'eau 5 est une mer soumise à des marées. Il est entendu que la réalisation décrite est également adaptée à une étendue d'eau ne présentant pas de variation substantielle de niveau. Chaque paroi d'un conduit 7 débouche dans le bassin d'aspiration 2 à un niveau qui se situe substantiellement en dessous du niveau $L_L$ de plus basse marée lors des plus forts coefficients de marée, cf. FIG.2. En effet, l'alimentation en eau du bassin d'aspiration par le tunnel d'aspiration 3 s'effectue par l'équilibrage des niveaux dû à la pression atmosphérique. Compte tenu du débit d'aspiration de la station de pompage 10, les pertes de charges dans les puits d'aspiration 8 et dans le tunnel 3 ont pour conséquence que le niveau $L_2$ de l'eau dans le bassin d'aspiration peut se situer à plusieurs centimètres voire dizaines de centimètres en dessous du niveau $L_1$ de la mer mesuré au dessus des entrées d'eau 51 et 52, le niveau $L_1$ considéré étant moyenné entre les sommets et les creux des vagues de houle. Ce niveau $L_1$ moyenné est sensiblement le même au dessus des entrées d'eau et dans le chenal 6 qui procure un lissage des variations rapides de hauteur de la mer dues à la houle. Lorsque le niveau $L_1$ de la mer atteint le niveau $L_L$ de plus basse marée, le niveau $L_2$ de l'eau dans le bassin d'aspiration atteint un niveau $L_{2L}$ qui doit se situer à une certaine hauteur au dessus de l'embouchure 7E d'un conduit 7, afin de ne pas risquer un vidage progressif du bassin d'aspiration par les pompes de fonctionnement de production de la station de pompage 10. Par ailleurs, la hauteur du bassin d'aspiration est prévue de façon à ce que lorsque le niveau $L_1$ de la mer atteint le niveau $L_H$ de plus haute marée lors des plus forts coefficients de marée, l'eau ne déborde pas du bassin d'aspiration.

Dans l'exemple de réalisation représenté sur la FIG.1, le bassin d'aspiration 2 étant conçu dans un chenal 6, la réserve d'eau de secours est avantageusement formée par la partie d'entrée 60 du chenal qui est peu sujette aux phénomènes de houle et de lames de fond que l'on peut rencontrer en bord de mer à l'extérieur du chenal. Il peut être prévu à l'entrée du chenal un système de filtration non représenté sur la figure, comprenant par exemple des grilles pouvant être nettoyées de temps à autres, de façon à conserver dans la partie d'entrée 60 du chenal une eau exempte de pollutions par des objets flottants ou par des algues. En effet, du fait que l'eau arrivant par le tunnel d'aspiration 3 n'est pas affectée par de telles pollutions, un système de filtration 12 de la station de pompage 10 (cf. FIG.2) peut avantageusement se passer de moyens de filtration et de nettoyage spécifiques à ces types de pollutions. Dans une situation d'urgence où le bassin d'aspiration 2 doit être rapidement alimenté en eau par la partie d'entrée 60 du chenal, il ne faut pas risquer une pollution du système de filtration 12.

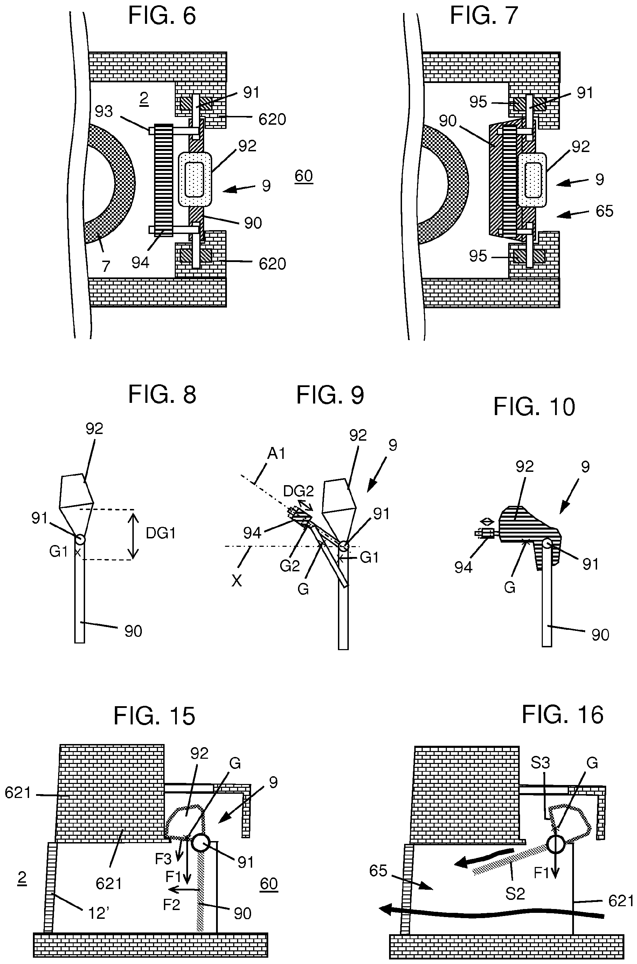

Comme représenté sur la FIG.4 ainsi que sur les figures 5 à 7, pour réaliser le système d'amenée d'eau additionnelle, la paroi fermée 62 est remplacée par une paroi de séparation 620 présentant une ouverture 65 fermée par un dispositif d'obturation sous la forme d'un clapet pivotant 9. Le clapet 9 comprend un organe d'obturation 90 sous la forme d'un panneau d'étanchéité généralement plan, par exemple sensiblement rectangulaire, et apte à pivoter par rapport à un axe pivot 91. Le clapet 9 comprend en outre un dispositif de contrepoids disposé sur un côté opposé au panneau d'étanchéité 90 par rapport à l'axe pivot 91. Le dispositif de contrepoids comprend un organe de contrepoids principal 92 situé à une distance fixe de l'axe pivot 91. Le dispositif de contrepoids comprend en outre un dispositif de contrepoids auxiliaire réglable, qui comprend par exemple un contrepoids auxiliaire 94 monté de façon déplaçable sur deux bras 93 fixés au clapet 9. De cette façon, la position du centre de gravité G du dispositif d'obturation 9 peut être ajustée dans une certaine mesure, comme détaillé plus loin en référence à la FIG.9. Le clapet 9 est conçu de telle sorte que le centre de gravité G se situe à une certaine distance du plan du panneau d'étanchéité 90, afin que le moment de rotation exercé par le poids du clapet par rapport à l'axe pivot 91 procure un effort permettant de maintenir le clapet fermé malgré une hauteur d'eau $L_1$ de la mer supérieure à la hauteur d'eau $L_2$ dans le bassin d'aspiration.

Pour un débit d'aspiration constant de la station de pompage 10 afin d'alimenter en eau un circuit de refroidissement 11 à échangeur de chaleur 13, la différence de hauteur $\Delta h$ entre le niveau $L_1$ de la mer et le niveau $L_2$ de l'eau dans le bassin d'aspiration ne varie quasiment pas avec le niveau de la mer. L'effort de fermeture du clapet 9 procuré par le poids du clapet comme expliqué ci-dessus est prévu supérieur à l'effort d'ouverture du clapet procuré par la différence de pression de l'eau entre les deux faces du panneau d'étanchéité 90 due à la différence de hauteur d'eau $\Delta h$, cette différence $\Delta h$ étant considéré pour un débit d'aspiration de la station de pompage en fonctionnement de production à pleine puissance de la tranche nucléaire correspondante. De cette façon, tant que le bassin d'aspiration 2 est normalement alimenté en eau par un tunnel d'aspiration 3, le clapet 9 reste fermé comme représenté sur la FIG.4 et sur la FIG.6, de telle sorte que l'eau du bassin d'aspiration ne se mélange quasiment pas à l'eau de la réserve d'eau de secours formée par la partie d'entrée 60 du chenal. Il n'est pas nécessaire que le clapet 9 réalise une très bonne étanchéité, des fuites d'eau sont en effet acceptables depuis la partie d'entrée 60 vers le bassin d'aspiration 2 dès lors que la température de l'eau dans le bassin d'aspiration ne s'en trouve pas significativement augmentée.

L'effort de fermeture du clapet 9 procuré par le poids du clapet est prévu pour correspondre à une différence critique de hauteur d'eau $\Delta hV$ prédéterminée pour traduire indubitablement une alimentation en eau insuffisante du bassin d'aspiration 2 par le ou les tunnels d'aspiration 3. En d'autres termes, il est prévu que l'effort d'ouverture du clapet procuré par cette différence critique

$\Delta hv$ dépasse en intensité l'effort de fermeture du clapet dès lors que la différence de hauteur d'eau $\Delta h$ dépasse la différence critique $\Delta hV$, de façon à provoquer une ouverture du clapet une fois que la différence critique $\Delta hV$ est atteinte. En pratique, il faut aussi tenir compte du frottement statique des organes de pivotement du clapet, par exemple des roulements associés à l'axe pivot 91 si ce dernier est prévu pour pivoter sur des paliers de roulements 95 (cf. FIG.5 et FIG.7).

Un éventuel effondrement dans un tunnel d'aspiration 3 a peu de chances de se produire précisément pendant une période où le niveau $L_1$ de la mer est aussi bas que le niveau $L_L$ de plus basse marée lors des plus forts coefficients de marée. Par conséquent, si la différence critique de hauteur d'eau $\Delta hV$ est atteinte suite à un effondrement dans le tunnel, le clapet 9 s'ouvrira généralement alors que le niveau $L_2$ de l'eau dans le bassin d'aspiration 2 est supérieur à un niveau critique $L_{2V}$ correspondant au cas de plus basse marée représenté sur la FIG.5.

Par ailleurs, le dimensionnement du clapet 9 peut être différent selon la fonction souhaitée du système d'amenée d'eau additionnelle. Il peut en effet être souhaité que le clapet 9 une fois ouvert permette un passage d'eau avec un débit suffisant pour autoriser un fonctionnement normal de la station de pompage 10 pour une production électrique à pleine puissance d'une tranche nucléaire dans des périodes où la température de l'eau à la surface de la mer ne dépasse pas une certaine valeur, par exemple entre 10°C et 20°C. La réparation d'un tunnel d'aspiration ayant subi un effondrement peut prendre des mois voire plus d'une année pour un effondrement critique sur plusieurs branches de tunnel. La production électrique de la centrale nucléaire pourrait alors être poursuivie pendant tout ou partie de la durée des travaux, en particulier en hiver, en utilisant le chenal 6 pour alimenter en eau le bassin d'aspiration 2. En alternative à un clapet 9 de grande dimension pour permettre le débit d'eau maximal requis pour la production, on peut prévoir un clapet 9 de plus petite dimension disposé en parallèle d'une vanne de débit principal telle qu'une vanne du type à porte à relevage installée à côté du clapet 9 dans la paroi de séparation 620. La vanne de débit principal, non représentée sur les figures, serait alors commandée en ouverture après le déclenchement du clapet 9, l'ouverture de la vanne étant nécessaire en préalable au redémarrage des pompes de fonctionnement de production.

Dans d'autres configurations de centrales nucléaires, par exemple dans le cas d'une centrale nucléaire installée près d'une mer restant relativement chaude toute l'année, un fonctionnement normal de la station de pompage 10 pour une production électrique à pleine puissance peut s'avérer impossible si l'alimentation en eau du bassin d'aspiration doit se faire par le chenal 6. Dans ce cas, le clapet 9 pourra avoir des dimensions relativement petites de façon à permettre un passage d'eau suffisant pour un débit minimum, par exemple d'environ 5 m3 par seconde, afin d'alimenter de façon sûre les pompes de fonctionnement de sauvegarde de la station de pompage 10 avec le débit d'eau requis. Il est également envisageable de prévoir des dimensions suffisantes du clapet 9 pour alimenter avec un débit réduit les pompes de fonctionnement de production dans le cadre d'une production électrique réduite de la centrale.

Pour le dimensionnement du bassin d'aspiration 2, il convient de prendre en compte le cas extrême où un effondrement critique dans le tunnel d'aspiration 3 se produit pendant une période où le niveau $L_1$ de la mer a atteint le niveau $L_L$ de plus basse marée lors des plus forts coefficients de marée. Juste avant l'interruption de l'arrivée d'eau par les conduits 7 reliés au tunnel d'aspiration, le niveau $L_{2L}$ de l'eau dans le bassin d'aspiration est à une hauteur inférieure au niveau $L_L$. Une fois l'arrivée d'eau interrompue ou pour le moins insuffisante au regard de la consommation d'eau de la station de pompage 10, il s'ensuit une baisse plus ou moins rapide du niveau de l'eau dans le bassin d'aspiration, jusqu'à atteindre le niveau critique $L_{2V}$ comme représenté sur la FIG.5. Comme expliqué précédemment, le clapet 9 est alors amené à pivoter pour s'ouvrir. Par ailleurs, un système de détection du niveau de l'eau et/ou du pivotement du clapet 9 peut avantageusement être prévu de façon à commander un arrêt de la production électrique et la commutation des pompes de fonctionnement de production de la station de pompage 10 sur les pompes de fonctionnement de sauvegarde.

Le système de filtration 12 est prévu sous le niveau critique $L_{2V}$, et les entrées d'eau de la station de pompage 10 sont prévues suffisamment sous ce niveau de façon à ne pas risquer leur mise à l'air pendant que le niveau de l'eau dans le bassin d'aspiration continue à baisser durant la phase d'arrêt des pompes de fonctionnement de production. En fonction du débit du passage d'eau ouvert par le clapet 9, le niveau de l'eau dans le bassin d'aspiration va remonter plus ou moins vite, et au plus tard une fois l'arrêt complet des pompes de fonctionnement de production. Grâce au dispositif de contrepoids du clapet 9, le positionnement du centre de gravité G du dispositif d'obturation au dessus du niveau de l'axe pivot 91 permet que le moment de rotation exercé par le poids du clapet par rapport à l'axe pivot 91 diminue au fur et à mesure de l'ouverture du clapet. Par conséquent, le clapet reste ouvert dans une position d'équilibre dynamique qui se maintient alors que la différence de hauteur d'eau Δh redevient inférieure à la différence critique ΔhV.

Le clapet 9 décrit ci-dessus constitue un dispositif d'obturation dont le pivotement s'opère de façon autonome, c'est-à-dire de façon passive sans nécessiter un déclenchement par un dispositif extérieur. De façon facultative, le pivotement du clapet 9 peut être actionné par un dispositif de déclenchement relié par exemple à un système de commande associé à système de détection du niveau de l'eau. Le dispositif de déclenchement peut par exemple agir sur un câble relié à une manivelle fixée au clapet au niveau de l'axe pivot 91, et peut être avantageusement adapté pour laisser le pivotement du clapet s'opérer de façon autonome en cas de non fonctionnement du dispositif de déclenchement. Le dispositif de déclenchement peut également être prévu pour maintenir le clapet 9 après son déclenchement dans une position de plus grande ouverture que la position d'équilibre dynamique évoquée ci-dessus en référence à la FIG.5.

Comme représenté sur la FIG.6 et la FIG.7, le contrepoids auxiliaire 94 peut être formé par une structure de poutre montée de façon à pouvoir coulisser perpendiculairement à deux bras 93 parallèles entre eux, de façon à ajuster la distance entre la poutre 94 et l'axe pivot 91 qui lui est parallèle. Par ailleurs, l'ouverture 65 formant le passage d'eau dans la paroi 620 qui sépare le bassin d'aspiration 2 de la partie d'entrée 60 du chenal peut être munie d'une grille de filtration et/ou de sécurité du côté de la partie d'entrée 60.

Avantageusement, l'organe de contrepoids principal 92 pèse entre 80% et 200% du poids de l'organe d'obturation 90. De cette façon, comme représenté sur la FIG.8, le centre de gravité G1 de l'ensemble des deux organes se situe relativement au voisinage de l'axe pivot 91 dans une plage de hauteur DG1. Pour relever la position du centre de gravité G1, on pourra augmenter le poids du contrepoids principal 92 et/ou remonter la position de son centre de gravité. Le dispositif de contrepoids auxiliaire fixé à cet ensemble est disposé de telle sorte que le centre de gravité G de l'ensemble complet se situe au dessus du niveau X de l'axe pivot 91, comme représenté sur la FIG.9. L'ajustement de la position du contrepoids auxiliaire 94 selon une direction A1 dans une certaine marge DG2 permet de déplacer le centre de gravité G2 du dispositif de contrepoids auxiliaire, et donc de plus ou moins éloigner le centre de gravité G par rapport à l'axe pivot 91. De la sorte, s'il est constaté pendant des essais ou en fonctionnement de production une ouverture intempestive du clapet 9 alors que le tunnel d'aspiration fonctionne, par exemple lors d'une tempête affectant le bord de mer 5B, la position du contrepoids auxiliaire 94 pourra être réajustée de façon à correspondre à une différence critique de hauteur d'eau ΔhV réévaluée à la hausse.

L'organe de contrepoids principal 92 et le dispositif comprenant le contrepoids auxiliaire 94 peuvent former un ensemble quasiment en un seul bloc qui vient se fixer par emboitement sur l'organe d'obturation 90, comme représenté sur la FIG.10.

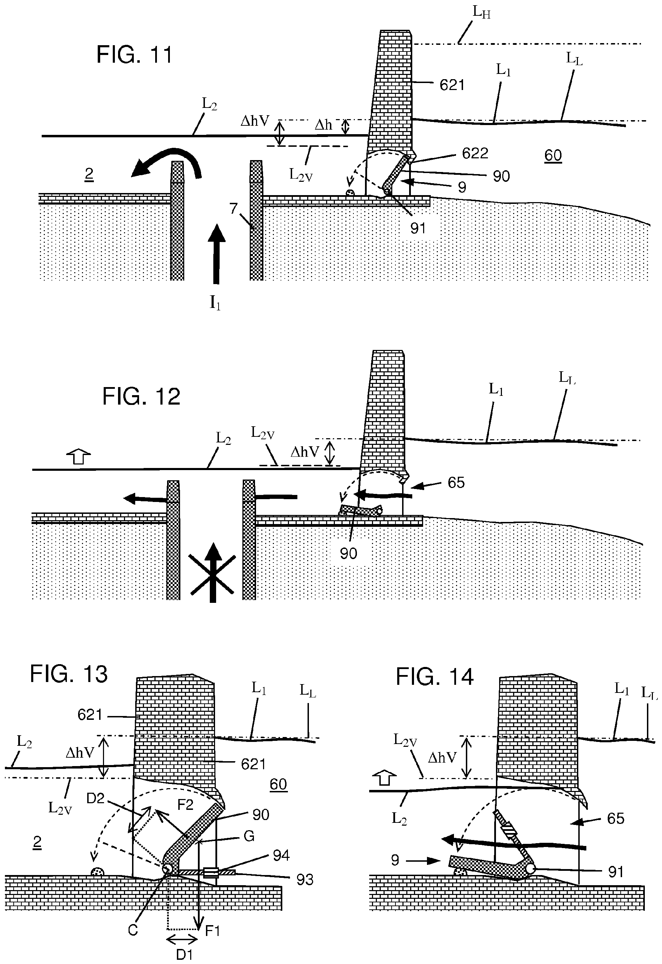

Un autre mode de réalisation d'un système d'amenée d'eau additionnelle d'une installation d'amenée d'eau selon l'invention est représenté sur les figures 11 à 14. En comparaison avec la réalisation précédente, ce mode de réalisation permet de diminuer les dimensions du dispositif d'obturation 9, et en particulier les dimensions de l'organe d'obturation 90. Comme représenté sur la FIG.11 et la FIG.12, l'ouverture 65 formant le passage d'eau dans la paroi 621 qui sépare le bassin d'aspiration 2 de la partie d'entrée 60 du chenal est disposée dans une partie inférieure de la paroi 621. Un panneau d'étanchéité généralement plan, par exemple sensiblement rectangulaire, forme l'organe d'obturation 90 du clapet 9. Les dimensions du panneau d'étanchéité 90 sont quelque peu supérieures à la section de passage de l'ouverture 65, laquelle section de passage peut être prévue relativement petite, par exemple de l'ordre de 2 à 3 m2, pour permettre un passage d'eau simplement suffisant pour alimenter de façon sûre les pompes de fonctionnement de sauvegarde de la station de pompage 10. Comme expliqué pour le mode de réalisation précédent, il est également possible de disposer en parallèle une vanne de débit principal, telle qu'une vanne du type à porte à relevage actionnée par une commande, également appelée vanne à guillotine, installée à côté du clapet 9 dans la paroi de séparation 621.

L'axe pivot 91 du clapet 9 est fixé au niveau d'un bord inférieur du panneau d'étanchéité 90. Les organes de pivotement du clapet comprennent par exemple des roulements associés à l'axe pivot 91 et prévus pour pivoter sur des paliers de roulements installés sur le fond du bassin d'aspiration. Il peut être prévu des caissons d'air pressurisé ou des colonnes creuses étanches à l'eau, ayant chacun une paroi traversée par l'axe pivot 91, pour contenir et maintenir à l'air les roulements et leurs paliers. En alternative à la place des roulements, il peut être prévu que l'axe pivot 91 soit formé par une barre présentant sur sa longueur une arête par exemple en acier inoxydable qui est mise en appui contre la surface intérieure d'un demi-tube ou d'un organe palier à face concave analogue parallèle à la barre et fixé au sol sur le fond du bassin. La face concave de l'organe palier sera orientée généralement vers la partie d'entrée 60 du chenal, de façon à empêcher un déplacement de l'axe pivot 91 en direction du bassin d'aspiration y compris une fois que le clapet 9 a pivoté comme représenté sur la FIG.12. Le frottement statique d'un tel dispositif d'axe pivot à arête peut être assez faible, et surtout peut être obtenu relativement stable dans le temps sans nécessiter une maintenance particulière du dispositif.

Le panneau d'étanchéité 90 est installé dans l'ouverture 65 de la paroi 621 de façon à fermer l'ouverture avec une plus ou moins bonne étanchéité, et est monté avec une certaine inclinaison par rapport à une direction verticale. Une butée de maintien de la position inclinée du panneau 90 est formée par exemple par un épaulement 622 de la paroi 621. L'inclinaison et le poids du panneau 90 sont prédéterminés de façon à ce que le panneau reste en position dans la situation de fonctionnement normal du tunnel d'aspiration, comme représenté sur la FIG.11. En d'autres termes, le panneau 90 ne doit pas pivoter en situation normale malgré la pression d'eau différentielle exercée sur la face du panneau du côté du chenal du fait de la différence de hauteur d'eau $\Delta h$ entre le niveau $L_1$ de la mer et le niveau $L_2$ de l'eau dans le bassin d'aspiration, mais doit pivoter pour que le clapet 9 s'ouvre si la différence critique de hauteur d'eau $\Delta hV$ est atteinte comme représenté sur la FIG.12.

Le clapet 9 ne nécessite pas d'organe de contrepoids massif tel qu'un organe de contrepoids principal 92 décrit précédemment. En effet, une fois que le panneau 90 commence à pivoter, l'inclinaison du panneau par rapport à la direction verticale diminue, ce qui diminue le moment de rotation exercé par le poids du panneau par rapport à l'axe pivot 91 et diminue donc la résistance du clapet à l'effort d'ouverture provoqué par la différence critique de hauteur d'eau $\Delta hV$. Le clapet 9 est donc assuré de s'ouvrir complètement dès lors que le panneau 90 a commencé à pivoter.

Sur la FIG.13, une variante du système d'amenée d'eau additionnelle de la FIG.11 consiste à munir le clapet d'un dispositif de contrepoids réglable comprenant par exemple un contrepoids 94 monté de façon déplaçable sur deux bras parallèles 93 fixés au clapet 9, de façon analogue au dispositif de contrepoids auxiliaire 94 décrit précédemment en référence à la FIG.4 et la FIG.6. Par ailleurs, de façon à optimiser la section de passage de l'ouverture 65 de la paroi de séparation 621, le sol est abaissé sous le contrepoids 94, et la butée de maintien de la position inclinée du panneau 90 est formée au voisinage de l'axe pivot 91. Un contrepoids 94 relativement léger, par exemple pesant moins de 10% du poids du panneau 90, peut suffire pour les éventuels essais d'ajustement du centre de gravité G du clapet.

Comme représenté sur la FIG.13, le clapet 13 est soumis à deux moments de rotation antagonistes, c'est-à-dire dans des sens opposés, par rapport à l'axe pivot 91. Le moment de rotation exercé par le poids du clapet est égal à la valeur F1 du poids multipliée par la distance D entre le vecteur poids s'appliquant au centre de gravité G du clapet et l'axe central C de l'axe pivot 91. Le moment de rotation algébrique exercé par la force de pression d'eau différentielle qui s'applique sur le panneau 90 est égal à la valeur algébrique F2 de cette force multipliée par la distance D2 entre le vecteur F2 de la force et l'axe central C. L'inclinaison du panneau 90, ainsi que le centre de gravité et le poids du clapet, sont prédéterminés de façon à ce que les deux moments de rotation opposés aient la même valeur absolue si la différence critique de hauteur d'eau $\Delta hV$ est atteinte. Comme représenté sur la FIG.14, un léger dépassement de la différence critique de hauteur d'eau $\Delta hV$ permet de vaincre le frottement statique du dispositif d'axe pivot 91, et provoque le pivotement du panneau 90 pour ouvrir le clapet 9. Le niveau $L_2$ de l'eau dans le bassin d'aspiration peut continuer à descendre tant que les pompes de fonctionnement de production ne sont pas complètement arrêtées, et remonte dès lors que seules les pompes de fonctionnement de sauvegarde sont actives.

Un autre mode de réalisation d'un système d'amenée d'eau additionnelle analogue à celui de la FIG.11 pour une installation d'amenée d'eau selon l'invention est représenté sur la FIG.15. La réalisation du dispositif d'obturation 9 en particulier diffère de la réalisation précédente, notamment en ce que le panneau d'étanchéité 90 n'est pas le seul organe d'étanchéité du clapet 9 entre le bassin d'aspiration 2 et la partie d'entrée 60 du chenal. En effet, un organe de contrepoids principal 92 tel que décrit précédemment forme ici une surface d'étanchéité S3 de l'autre côté du panneau 90 par rapport à l'axe pivot 91. De cette façon, un moment de rotation exercé par la force F3 de pression d'eau différentielle qui s'applique sur la surface d'étanchéité S3 s'ajoute au moment de rotation exercé par le poids F1 du clapet, dans un sens de rotation opposé au moment de rotation exercé par la force F2 de pression d'eau différentielle qui s'applique sur le panneau 90.

Cette réalisation d'un clapet 9 permet de maintenir le clapet fermé jusqu'à une relativement grande différence critique de hauteur d'eau $\Delta hV$ sans nécessiter un système de contrepoids particulièrement massif. En effet, on peut prévoir lors de la conception d'augmenter les dimensions de la surface d'étanchéité S3 afin d'adapter le clapet à une plus grande différence critique de hauteur d'eau $\Delta hV$. Par ailleurs, comme représenté sur la FIG.16, le clapet 9 une fois ouvert libère une section de passage d'eau quasiment égale à la section de l'ouverture 65. En outre, selon la position prévue de son centre de gravité G, le clapet peut être prévu pour se refermer de façon autonome si le fonctionnement du tunnel d'aspiration est rétabli. De façon optionnelle, il peut être prévu une grille 12' de filtration et/ou de sécurité sur l'ouverture 65 du côté du bassin d'aspiration 2.

Un système d'amenée d'eau additionnelle d'une installation d'amenée d'eau selon l'invention peut comprendre un tunnel de secours, en particulier si le bassin d'aspiration est éloigné de la réserve d'eau de secours. Ceci peut être le cas par exemple si la centrale nucléaire est séparée du bord de mer par une zone de terre non constructible, interdisant donc la construction d'un chenal qui arriverait au bassin d'aspiration mais pouvant autoriser le passage d'un un tunnel de secours sous la zone de terre. Ce peut encore être le cas par exemple si la centrale nucléaire est située à côté d'une étendue d'eau susceptible de connaître une montée des eaux inhabituelle.

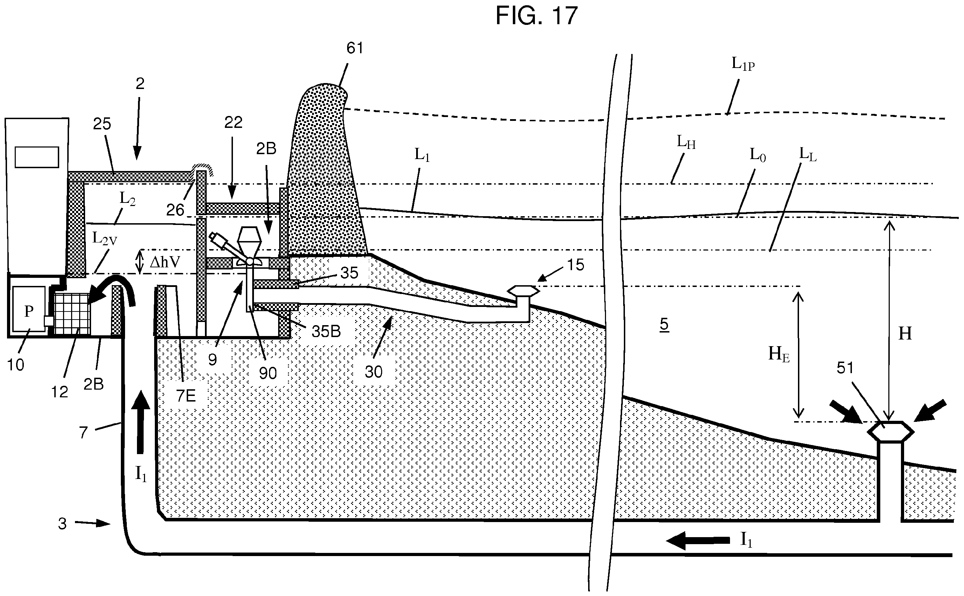

Sur la FIG.17, une installation d'amenée d'eau selon l'invention peut être adaptée pour une telle centrale nucléaire située à côté d'une telle étendue d'eau. On entend par montée des eaux inhabituelle un raz de marée tel que provoqué par exemple par un tsunami, ou encore une crue exceptionnelle d'un fleuve. Une installation d'amenée d'eau telle que représenté sur la FIG.1 nécessite relativement peu d'aménagements pour résister à une montée des eaux inhabituelle. La digue 61 doit être prévue d'une hauteur suffisante pour ne pas être submergée si l'étendue d'eau 5 atteint la hauteur $L_{1P}$ du plus haut niveau estimé. Par ailleurs, la digue 61 doit protéger complètement la centrale, et il n'est donc plus question d'une ouverture sur la mer telle que par un chenal. Pour simplifier la description, on considère dans ce qui suit que l'étendue d'eau 5 est une mer, mais il est entendu que l'installation décrite concerne également toute étendue d'eau appropriée au refroidissement d'une centrale, comme par exemple un fleuve.

Avantageusement, l'embouchure 7E d'un conduit 7 reliant le bassin d'aspiration 2 au tunnel d'aspiration 3 se situe à une hauteur prédéterminée au dessus du fond 2B du bassin d'aspiration, de façon à ce qu'en cas de baisse exceptionnelle du niveau de la mer sous le niveau $L_L$ de plus basse marée comme cela peut se produire par exemple en bord de mer dans certaines régions sujettes à des tsunamis, un certain volume d'eau reste disponible en réserve dans le bassin d'aspiration. Dans le cas de la plus critique estimation de la baisse du niveau de la mer, le niveau $L_1$ de la mer restera un certain temps sous le niveau de l'embouchure 7E du conduit 7, ce qui implique que pendant ce temps qui peut atteindre plusieurs minutes l'alimentation en eau la station de pompage 10 se fera uniquement par le volume d'eau de réserve. Ce volume d'eau doit donc être prévu de façon à avoir le temps d'arrêter la production électrique de la tranche nucléaire, et de commuter les pompes de fonctionnement de production de la station de pompage 10 sur des pompes de fonctionnement de sauvegarde, ceci sans risquer une rupture de l'alimentation en eau des pompes de fonctionnement de sauvegarde. L'alimentation des pompes de fonctionnement de sauvegarde par le volume d'eau de réserve doit pouvoir être assurée jusqu'à ce que le niveau de la mer remonte suffisamment pour que l'eau dans le conduit 7 repasse au dessus du niveau de l'embouchure 7E du conduit, c'est-à-dire jusqu'à ce que le tunnel 3 alimente à nouveau le bassin d'aspiration. En première approximation, on estime par exemple qu'un volume d'eau de réserve d'environ 10000 m3 pour une station de pompage d'une tranche nucléaire suffit pour pallier à la baisse la plus critique envisageable du niveau de la mer avant une première vague d'un tsunami, durant au moins quinze minutes environ.

Afin d'éviter un débordement incontrôlé du bassin d'aspiration 2 en cas de montée inhabituelle du niveau de la mer, par exemple pendant ou après une première vague d'un tsunami, le bassin est couvert par un dispositif formant un couvercle 25 essentiellement étanche à l'eau. Des ouvertures calibrées 26 peuvent être réalisées dans le couvercle 25 ou à proximité, par exemple dans une paroi latérale du bassin, entre le bassin et son environnement extérieur. De cette façon, en cas de remplissage complet du bassin 2, les ouvertures calibrées 26 laissent passer un flux d'eau limité Ip depuis le bassin vers l'environnement extérieur. Le flux Ip peut être canalisé vers un petit bassin 22 formé sur un couvercle d'un compartiment 21 du bassin d'aspiration 2, avant d'être rejeté par exemple dans la mer à marée basse.

En outre, comme expliqué précédemment en référence à la FIG.1 et la FIG.4, dans une tranche nucléaire 1A, l'eau en sortie du circuit de refroidissement 11 à échangeur de chaleur 13 est évacuée dans un puits de rejet 14 pour être rejetée dans la mer par un tunnel de rejet 4. En cas de montée inhabituelle du niveau de la mer, il faut éviter un débordement incontrôlé du puits de rejet. Avantageusement, le puits de rejet 14 est également muni d'un dispositif formant un couvercle avec au moins une ouverture calibrée de façon à laisser passer un flux d'eau limité vers l'extérieur du puits de rejet en cas de débordement. Cette disposition s'applique à toute centrale nucléaire comprenant une installation d'amenée d'eau selon l'invention et susceptible de subir une montée inhabituelle du niveau de l'étendue d'eau 5. Par ailleurs, afin de parer à l'éventualité d'un relatif bouchage du tunnel de rejet 4, le puits de rejet 14 peut avantageusement être muni d'un clapet fermé s'ouvrant vers l'extérieur uniquement au-delà d'une certaine pression d'eau dans le puits, ou encore d'un dispositif d'obturation à ouverture commandée, pour communiquer avec une conduite auxiliaire de rejet débouchant dans la mer. En cas de bouchage du tunnel de rejet 4, le niveau d'eau dans le puits de rejet 14 va monter du fait de l'apport en eau par les pompes R (FIG.4), et l'ouverture du clapet ou du dispositif d'obturation commandé est déclenchée peu avant que le niveau atteigne le couvercle du puits pour évacuer l'eau par la conduite auxiliaire de rejet.

La pression maximale de l'eau dans le bassin d'aspiration 2 au niveau du couvercle 25 est fonction notamment du plus haut niveau $L_{1P}$ de la mer à la verticale des entrées d'eau 51 et 52, par rapport au niveau du couvercle 25. En fonction du flux d'eau Ip passant par les ouvertures calibrées 26, la dépressurisation dans le bassin d'aspiration 2 sera plus ou moins importante. Il est envisageable de se passer des ouvertures 26 et de les remplacer par des clapets qui permettent une entrée d'air et qui empêchent l'eau de sortir. Dans ce cas, en particulier les structures du bassin 2, du couvercle 25, et du système de filtration 12, devront supporter la pression supplémentaire.

L'installation d'amenée d'eau comprend en outre un système d'amenée d'eau additionnelle fonctionnellement analogue à celui décrit précédemment en référence à la FIG.4, et qui comprend un passage d'eau sous la forme un tunnel de secours 30 relié à au moins une entrée d'eau de secours 15 immergée dans la mer. Une entrée d'eau de secours 15 doit être immergée à une profondeur lui permettant de ne jamais être mise à l'air hormis le cas d'une baisse très exceptionnelle du niveau de la mer comme cela peut se produire avant l'arrivée d'une première vague d'un tsunami, et se situe donc sous le niveau $L_L$ de plus basse marée lors des plus forts coefficients de marée. Il n'est généralement pas nécessaire qu'une entrée d'eau de secours 15 soit disposée à plus d'une dizaine de mètres sous le niveau $L_L$, une disposition à moins de dix mètres sous ce niveau $L_L$ suffira en général à éviter la pollution de l'entrée d'eau par des objets flottants ou des algues. Une entrée d'eau principale 51 ou 52 sera quant à elle disposée généralement à plus d'une vingtaine de mètres sous le niveau $L_L$ de plus basse marée, de façon à ce que la diminution de la température maximale de l'eau aspirée soit importante. Par conséquent, une entrée d'eau de secours 15 sera disposée généralement à une hauteur $H_E$ d'au moins dix mètres au dessus d'une entrée d'eau principale.

Le tunnel de secours 30 passe sous la digue 61 et comprend un conduit horizontal 35 qui traverse une paroi du bassin d'aspiration 2 de façon à déboucher dans le bassin en présentant une extrémité 35B qui forme une surface plane verticale. Un dispositif d'obturation 9 sous la forme d'un clapet à pivotement autonome, pouvant être quasiment identique à celui décrit précédemment en référence à la FIG.4, est installé dans le bassin d'aspiration 2, par exemple dans un compartiment 2B du bassin permettant un accès au clapet dans le cadre d'une maintenance sans risquer que des objets ou des personnes soient aspirés vers la chambre principale 2A du bassin d'aspiration. Une ouverture 21 prévue entre le compartiment 2B et la chambre 2A peut être munie d'une grille de sécurité. Dans la position fermée du clapet 9, le panneau d'étanchéité plan 90 formant l'organe d'obturation du clapet est en appui contre l'extrémité 35B du tunnel de secours 30 et ferme donc le passage d'eau.

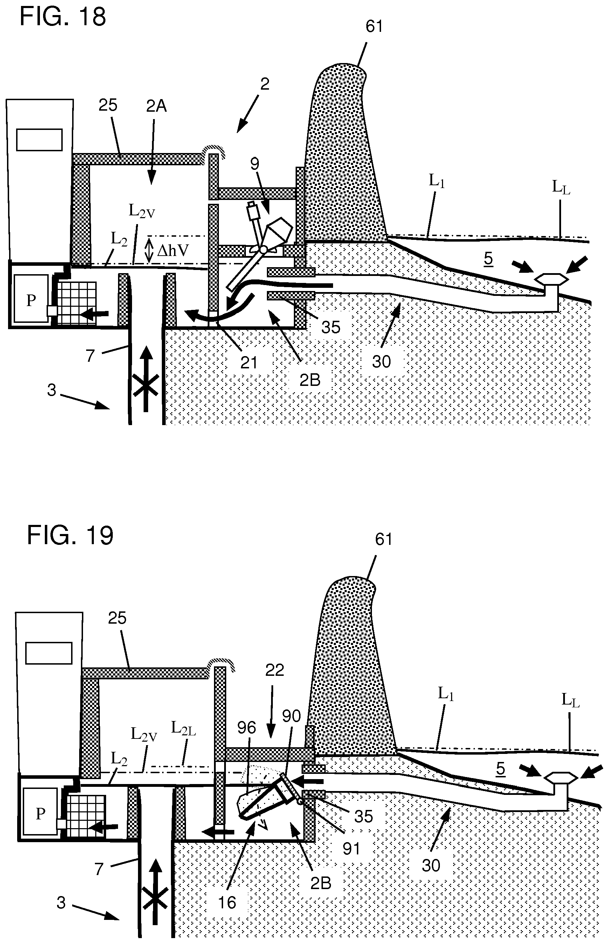

Comme représenté sur la FIG.18, dans le cas d'une alimentation insuffisante de la station de pompage 10 par l'eau provenant du tunnel d'aspiration, le niveau $L_2$ de l'eau dans le bassin d'aspiration 2 baisse jusqu'à ce que la différence critique de hauteur d'eau $\Delta hV$ prédéterminée entre le niveau $L_1$ de la mer et le niveau $L_2$ du bassin soit dépassée, ce qui provoque le pivotement du clapet 9 et donc l'ouverture du passage d'eau. L'eau provenant de la mer par le tunnel de secours 30 passe dans le compartiment 2B du bassin puis dans la chambre principale 2A du bassin par l'ouverture 21.

Il est entendu que le dispositif d'obturation du système d'amenée d'eau additionnelle de la FIG.17 n'est pas limité à un clapet 9 à dispositif de contrepoids massif. Par exemple, un dispositif de clapet 9 tel que décrit précédemment en référence à la FIG.11, la FIG.13, ou encore la FIG.15, peut être prévu à la place dans le compartiment 2B du bassin d'aspiration, moyennant notamment une adaptation du conduit 35.

Comme représenté sur la FIG.19, selon un autre mode de réalisation du dispositif d'obturation, le dispositif de clapet pivotant 16 comprend un dispositif de flotteur 96, disposé de façon à être complètement immergé dans l'eau pendant une alimentation normale en eau par le tunnel d'aspiration 3. Le volume du dispositif de flotteur 96 est prédéterminé de façon à ce que la poussée d'Archimède exercée sur le flotteur complètement immergé soit suffisante pour maintenir le clapet 16 fermé pendant une alimentation normale en eau, en contrebalançant l'effort d'ouverture du clapet dû à la pression d'eau différentielle exercée sur la face du panneau d'étanchéité 90 du côté du tunnel de secours 30. Le flotteur 96 possède une structure adaptée pour résister à la pression élevée de l'eau dans le bassin d'aspiration 2 en cas de raz de marée.

Dans le cas d'une alimentation en eau insuffisante de la station de pompage 10, si le niveau d'eau $L_2$ dans le bassin d'aspiration 2 descend en dessous du niveau de plus basse marée $L_{2L}$ jusqu'à atteindre le niveau prédéterminé de déclenchement $L_{2V}$, le flotteur 96 est prévu pour émerger au moins en partie de l'eau, de façon à ce que la diminution de la poussée d'Archimède exercée sur le flotteur provoque un pivotement du clapet 16 et donc de l'organe d'obturation 90. Avantageusement, le volume et le poids du dispositif de flotteur 96 sont prédéterminés de façon à ce que si la différence critique de hauteur d'eau $\Delta hV$ prédéterminée est dépassée, l'effort d'ouverture du clapet dû à la pression d'eau différentielle soit supérieur à l'effort de fermeture du clapet dû au moment de rotation du dispositif flottant par rapport à l'axe pivot 91. Ainsi, dès lors que le niveau $L_1$ de la mer se situe substantiellement au dessus du niveau $L_L$ de plus basse marée lors des plus forts coefficients de marée, le clapet 16 commence à pivoter pour ouvrir le passage d'eau dès que la différence critique de hauteur d'eau $\Delta hV$ prédéterminée est dépassée.

Un avantage notable d'un tel clapet 16 à dispositif de flotteur 96 réside dans l'aptitude quasi certaine du clapet à pivoter de façon autonome au plus tard peu après que le niveau d'eau $L_2$ dans le bassin d'aspiration soit descendu sous le niveau de déclenchement $L_{2V}$. En effet, même à supposer un certain grippage de l'axe pivot 91 ou un relatif collage du panneau 90 sur l'extrémité du conduit 35 par de la matière organique, la baisse du niveau d'eau $L_2$ sous le niveau de déclenchement $L_{2V}$ fait émerger le flotteur 96 à tel point que l'effort d'ouverture du clapet devient suffisamment important pour vaincre nécessairement les forces statiques qui empêchent le pivotement. Par exemple, avec un niveau d'eau $L_2$ tel que représenté sur la FIG.19, on comprend que le clapet 16 ne peut pas rester fermé et pivote pour s'ouvrir comme représenté. Il est entendu qu'un tel clapet à dispositif de flotteur peut être également utilisé comme dispositif d'obturation à la place du clapet 9 dans un système d'amenée d'eau additionnelle tel que celui de la FIG.4.

Un inconvénient possible du dispositif réside dans la limitation de l'amplitude du pivotement du clapet, ce qui peut empêcher un débit d'eau suffisant par le tunnel de secours 30 dans le cas les pompes de fonctionnement de production de la station de pompage 10 seraient redémarrées dans des périodes où la température de l'eau à la surface de la mer reste froide. Dans ce cas, une solution consisterait à prévoir une section de passage suffisante du tunnel de secours 30 et du conduit 35, et de disposer une vanne commandée apte à une grande section de passage d'eau en parallèle avec le clapet 16 qui quant à lui peut être prévu pour permettre simplement le débit d'eau suffisant pour alimenter de façon sûre les pompes de fonctionnement de sauvegarde de la station de pompage. Par ailleurs, l'axe pivot 91 peut être formé par une barre présentant sur sa longueur une arête d'appui comme expliqué précédemment en relation avec le mode de réalisation représenté sur la FIG.11, ce qui devrait permettre d'empêcher un grippage significatif de l'axe sans nécessiter de maintenance particulière.

Par ailleurs, si la montée des eaux est due à un tsunami, et dans le cas où aucun tremblement de terre significatif précédant le tsunami ne serait ressenti dans la centrale, il peut être souhaitable de ne pas arrêter la ou les tranches nucléaires de la centrale et donc de ne pas arrêter les pompes de fonctionnement de production de la station de pompage pendant la montée des eaux. Une installation d'amenée d'eau telle que celle décrite précédemment en référence à la FIG.17 et la FIG.18 peut permettre un tel fonctionnement. Néanmoins, comme expliqué précédemment, pendant ce temps qui peut atteindre plusieurs minutes, l'alimentation en eau des pompes de fonctionnement de production doit alors pouvoir se faire uniquement par le volume d'eau de réserve contenu dans le bassin d'aspiration 2 sous le niveau de l'embouchure 7E du conduit 7. En première approximation, on estime par exemple qu'un volume d'eau de réserve pouvant aller jusqu'à environ 100000 m3 pour une station de pompage d'une tranche nucléaire serait nécessaire pour pallier à la baisse la plus critique envisageable du niveau de la mer avant une première vague d'un tsunami, durant au moins quinze minutes. Par exemple, avec une hauteur au moins égale à cinq mètres entre le fond 2B du bassin 2 et l'embouchure 7E du conduit 7, il faudrait de l'ordre de deux hectares de superficie du bassin pour assurer un tel volume d'eau de réserve.

La réalisation d'un bassin d'aspiration tel que celui de la FIG.17, dans le cas d'un volume de réserve particulièrement important sous le niveau de l'embouchure 7E du conduit 7, présente des inconvénients. En premier lieu, étant donné que le bassin est muni d'une toiture formant un couvercle résistant à une pression d'eau dans le bassin par exemple de l'ordre de deux bars pour contenir l'eau en cas de raz de marée ou de tsunami, la réalisation d'une telle toiture sur une superficie de l'ordre d'un hectare ou plus implique un coût de construction important. A fortiori, si le bassin d'aspiration 2 est commun à plusieurs stations de pompage alimentant plusieurs tranches nucléaires, la superficie de la toiture du bassin pénaliserait substantiellement le coût de construction de l'installation d'amenée d'eau dans sa globalité. Par ailleurs, étant donné que le débit d'aspiration d'une station de pompage pour l'alimentation en eau d'une tranche nucléaire en production à pleine puissance est par exemple de l'ordre de 70 m3 par seconde, il faudrait presque heure pour renouveler complètement avec un débit de l'ordre de 140 m3 par seconde l'eau d'un bassin d'aspiration commun à deux tranches nucléaires et contenant environ 500000 m3 mesurés en moyenne sur les marées hautes. Selon la température de l'air extérieur, et particulièrement si cette température extérieure dépasse 30°C à l'ombre, l'eau transitant dans le bassin pourrait se réchauffer de l'ordre de 1°C voire plus entre la sortie de l'eau du tunnel d'aspiration et l'entrée de l'eau dans la station de pompage. Il pourrait donc se produire une relative diminution du rendement de l'installation durant certaines périodes de l'année, en comparaison avec un bassin d'aspiration de volume beaucoup plus petit.

Afin de pallier à ces possibles inconvénients, un mode de réalisation d'une installation d'amenée d'eau selon l'invention propose de constituer une réserve d'eau de secours par un bassin de réserve contenant un volume d'eau qui reste substantiellement inchangé pendant une alimentation normale en eau du bassin d'aspiration par le ou les tunnels d'aspiration.

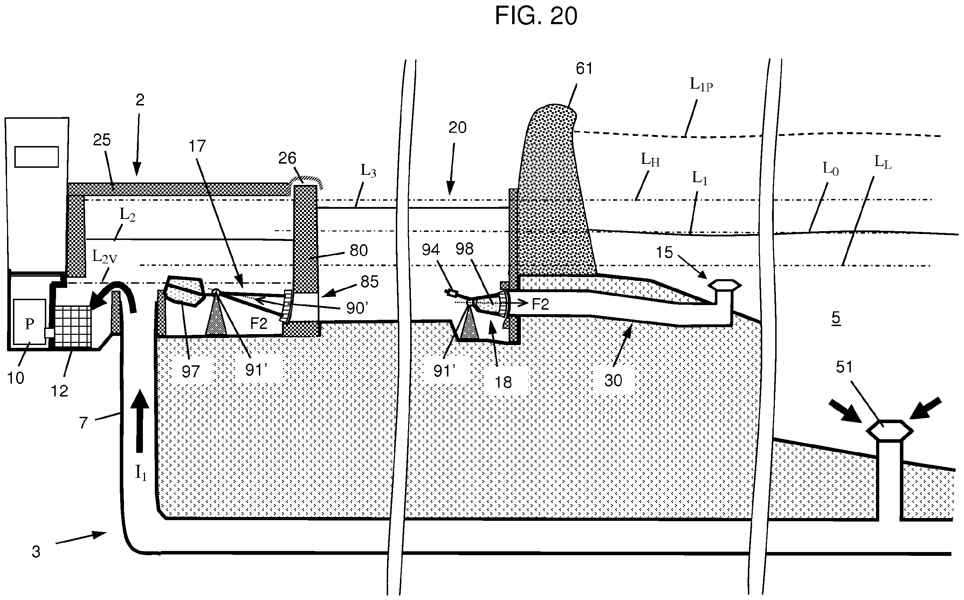

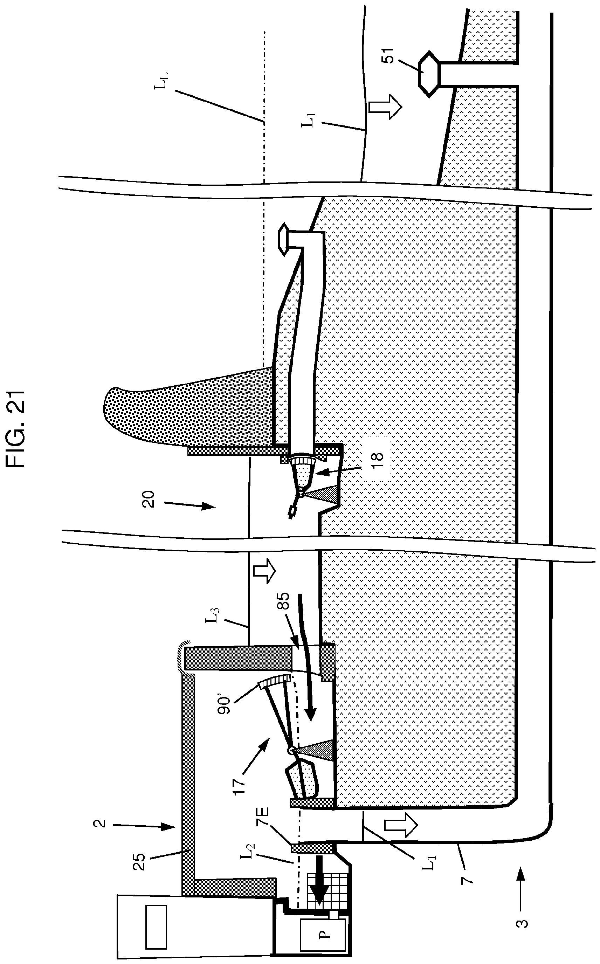

Un exemple d'une telle réalisation est représenté sur la FIG.20. Un bassin de réserve 20 est séparé du bassin d'aspiration 2 par un mur de barrage 80 dans lequel est prévu une ouverture 85 formant un passage d'eau du système d'amenée d'eau additionnelle. Le passage d'eau 85 débouche dans le bassin d'aspiration 2 au niveau d'une paroi courbée du mur 80 formant un arc de cercle ou une autre courbure continue dans un plan vertical correspondant au plan de la figure. Un dispositif d'obturation 17, représente en position fermée sur la figure, comprend un organe d'obturation sous la forme d'un panneau d'étanchéité 90' associé à une structure porteuse, le panneau ayant une surface extérieure de forme sensiblement complémentaire à la paroi courbée du mur 80. Le panneau 90' avec sa structure porteuse est relié à un axe pivot 91' horizontal autour duquel il est apte à pivoter, de façon à amener le dispositif d'obturation 17 dans une position d'ouverture du passage d'eau 85 comme représenté sur la FIG.21. L'axe pivot 91' peut coïncider sensiblement avec une droite formant l'axe central de courbure de la paroi courbée du mur 80. Etant donné que l'amplitude angulaire du pivotement du dispositif d'obturation 17 est inférieure à 90°, et est même ici inférieure à 45°, il peut être prévu que l'axe pivot 91 soit formé par une barre présentant sur sa longueur des arêtes alignées selon une même droite, orientées vers des côtés opposés et en appui sur des surfaces concaves de paliers, permettant d'obtenir un axe pivot immergé qui ne nécessite pas de graissage.

La surface extérieure du panneau d'étanchéité 90' est prévue pour affleurer à la surface de la paroi courbée du mur 80 dans la position fermée du dispositif d'obturation 17, de façon à ne créer qu'un faible interstice laissant un flux d'eau limité s'échapper du bassin de réserve 20 vers le bassin d'aspiration 2 quand le passage d'eau 85 est fermé. L'interstice entre le panneau d'étanchéité 90' et la paroi courbée du mur 80 est néanmoins prévu suffisant pour éviter tout risque de coincement entre le panneau et le mur, l'épaisseur de l'interstice pouvant fluctuer par exemple avec la dilatation thermique que subit la structure porteuse du panneau. Un interstice trop fin risquerait de permettre un contact avec coincement entre le panneau et le mur, ce qui gênerait l'ouverture du dispositif d'obturation 17.

Le dispositif d'obturation 17 comprend un dispositif de contrepoids disposé sur un côté opposé à l'organe d'obturation 90' par rapport à l'axe pivot 91'. Le dispositif de contrepoids comprend un organe de contrepoids principal 97 incluant une structure porteuse reliée de manière fixe à la structure porteuse du panneau 90'. Le dispositif d'obturation 17 est conçu de façon à commencer à pivoter depuis sa position de fermeture dès lors que le niveau d'eau dans le bassin a atteint un niveau prédéterminé de déclenchement $L_{2V}$ pour lequel une partie substantielle de l'organe de contrepoids principal 97 émerge de l'eau. L'organe de contrepoids principal 97 pèse avantageusement entre 80% et 200% du poids de l'organe d'obturation 90'. Par exemple, un poids approchant 200% du poids de l'organe d'obturation permet de rapprocher de l'axe pivot 91' l'organe de contrepoids principal 97, réduisant ainsi l'encombrement du dispositif d'obturation 17 et permettant en outre une plus grande amplitude de pivotement et donc d'ouverture du dispositif pour une baisse donnée du niveau de l'eau dans le bassin d'aspiration. En outre, le dispositif de contrepoids peut comprendre un contrepoids auxiliaire monté de façon déplaçable sur la structure porteuse du contrepoids principal. Par ailleurs, afin de réduire la surface au sol du bassin d'aspiration, et donc de réduire la surface de la toiture formant le dispositif de couvercle 25 du bassin, il est possible d'installer au moins un dispositif d'obturation 17 entre deux embouchures 7E de deux conduits 7 reliant le tunnel 3 au bassin d'aspiration 2.

Le bassin de réserve 20 s'étend sur une surface au sol bien plus grande que celle du bassin d'aspiration 2, et est ouvert par le haut sur l'extérieur. Le bassin de réserve 20 ne nécessite pas une toiture étanche, néanmoins un système de protection contre les rayons solaires, par exemple par une bâche, reste possible. Le niveau $L_3$ de l'eau dans le bassin de réserve 20 est maintenu relativement constant sous le niveau du dispositif de couvercle 25 du bassin d'aspiration. Par exemple, des pompes de circulation d'eau peuvent être prévues entre le bassin d'aspiration et le bassin de réserve dans les deux sens pour compenser les fuites d'eau permanentes vers le bassin d'aspiration par le dispositif d'obturation 17 ou au contraire pour vider de l'eau vers le bassin d'aspiration en cas de fortes pluies. Le volume d'eau dans le bassin de réserve 20 reste donc substantiellement inchangé tant que le bassin d'aspiration est normalement alimenté en eau par le ou les tunnels d'aspiration. Pour une centrale nucléaire dont le bassin d'aspiration alimente en eau deux tranches nucléaires, un bassin de réserve 20 contenant par exemple environ 100000 m3 d'eau semble suffisant pour pallier aux baisses les plus critiques envisageables du niveau de la mer.

La différence de hauteur entre le niveau $L_3$ de l'eau dans le bassin de réserve 20 et le niveau $L_2$ de l'eau dans le bassin d'aspiration 2 peut être importante, en particulier à marée basse, et peut atteindre par exemple environ dix mètres lors des plus basses marées d'une année sur un océan. Par conséquent une pression différentielle d'eau de l'ordre de un bar à son maximum s'applique sur le panneau d'étanchéité formant l'organe d'obturation 90' entre le bassin de réserve 20 et le bassin d'aspiration 2. En outre, le passage d'eau 85 fermé par le panneau d'étanchéité 90' doit avoir une section de passage suffisante pour un débit d'eau permettant la continuité du fonctionnement des pompes de fonctionnement de production d'une station de pompage, par exemple de l'ordre de 70 m3 par seconde, ce qui implique une relativement grande surface du panneau d'étanchéité 90'. Les efforts générés par la pression différentielle d'eau sur le panneau d'étanchéité 90' résultent en une force représentée sur la FIG.20 par un vecteur F2 qui s'applique sur ou à proximité du centre géométrique de la surface du panneau obturant le passage d'eau 85. Ce vecteur force F2 est dirigé perpendiculairement vers l'axe central de courbure de la paroi courbée du mur 80, qui peut être prévu pour coïncider avec l'axe pivot 91', de telle façon que le vecteur force ne génère aucun moment de rotation sur le dispositif d'obturation 17. Avantageusement, l'axe central de courbure de la paroi courbée du mur 80 peut être situé quelque peu au dessus de l'axe pivot 91', de telle façon que le vecteur force F2 dirigé perpendiculairement vers cet axe central génère sur le dispositif d'obturation 17 un moment de rotation aidant le dispositif à pivoter pour son ouverture. Cette dernière disposition peut avoir un intérêt dans le but de réduire le poids nécessaire pour l'organe de contrepoids principal 97, dès lors que le volume de cet organe reste suffisant pour la poussée d'Archimède requise dans la position fermée du dispositif d'obturation 17.

Dans l'exemple de réalisation représenté sur la FIG.20, le système d'amenée d'eau additionnelle peut faire communiquer le bassin d'aspiration 2 de façon indirecte avec une deuxième réserve d'eau de secours constituée par l'étendue d'eau 5, en l'occurrence la mer. En effet, dans le cas où l'alimentation en eau du bassin d'aspiration par le ou les tunnels d'aspiration devient durablement insuffisante, et notamment dans le cas d'un effondrement critique dans le ou les tunnels d'aspiration, une solution doit être mise en place pour poursuivre durablement l'alimentation en eau du bassin d'aspiration une fois que le volume d'eau du bassin de réserve 20 a sérieusement diminué. Compte tenu de la proximité de la mer, il est avantageux de prévoir un passage d'eau sous la forme d'un tunnel de secours 30 relié à au moins une entrée d'eau de secours 15 immergée dans la mer, comme décrit précédemment en référence à la FIG.17. Il est entendu que si la centrale est située à proximité d'une source d'eau telle qu'une rivière ou un lac ayant la possibilité de constituer de façon fiable et durable la deuxième réserve d'eau de secours, une liaison d'amenée d'eau entre une telle source d'eau et le bassin de réserve 20 peut éventuellement être préférée à la solution d'un tunnel de secours 30. Par exemple, un petit lac artificiel d'eau de mer maintenu à niveau par un pompage d'eau dans la mer pourrait être prévu sur le site de la centrale nucléaire ou à proximité, à une hauteur un peu plus élevée que le bassin de réserve 20, et être relié au bassin de réserve ou directement au bassin d'aspiration par un conduit fermé par une vanne.

Etant donné que le bassin de réserve 20 n'est pas fermé par un dispositif de couvercle, le dispositif d'obturation fermant le passage d'eau créé par le tunnel de secours 30 ne doit pas laisser l'eau de la mer rentrer dans le bassin de réserve en cas de raz de marée, car le bassin de réserve pourrait alors déborder avec un risque d'inondation de la centrale. Par conséquent, un dispositif d'obturation tel que le dispositif 9 en référence à la FIG.17 n'est pas approprié pour le bassin de réserve 20. Par ailleurs, dès que le niveau d'eau dans le bassin d'aspiration 2 descend d'une façon prédéterminée comme anormale, il peut être avantageux de détecter l'état du niveau de la mer afin de déterminer si la baisse du niveau dans le bassin d'aspiration est causée par un retrait anormal de la mer. Si le niveau de la mer n'a pas varié significativement, ce qui permet de conclure qu'un effondrement critique est survenu dans le ou les tunnels d'aspiration, les pompes de fonctionnement de production de la station de pompage peuvent être arrêtées pour commuter sur les pompes de fonctionnement de sauvegarde. Le volume d'eau du bassin de réserve 20 sera généralement suffisant pour alimenter pendant au moins deux heures les pompes de fonctionnement de sauvegarde. Du fait que l'on dispose de ce temps pour ouvrir le dispositif d'obturation qui ferme le tunnel de secours 30, un dispositif d'obturation sous la forme d'une vanne commandée non autonome, par exemple une vanne à guillotine, est envisageable. Contrairement à une vanne autonome, un tel dispositif d'obturation n'est pas à sécurité passive, et il faut que la vanne une fois ouverte puisse être refermée de façon certaine dans le cas où surviendrait un raz de marée.

Un dispositif d'obturation autonome similaire au dispositif 17 peut être utilisé pour fermer le tunnel de secours 30. En alternative, un dispositif pivotant 18 à flotteur peut être employé sans nécessiter un contrepoids. Le dispositif d'obturation 18 représenté sur la FIG.20 comprend un panneau d'étanchéité 90' courbé pivotant autour d'un axe pivot 91' qui peut être prévu pour coïncider avec la droite formant l'axe central de courbure de la paroi courbée du panneau. Un flotteur 98 est fixé à la structure porteuse du panneau d'étanchéité et est adapté pour pousser la structure vers le haut tant que le flotteur est complètement immergé. Un petit contrepoids de réglage peut être ajouté au dispositif, de façon à ajuster le déclenchement du pivotement d'ouverture dès que le flotteur affleure au dessus du niveau de l'eau.

Comme représenté sur la FIG.21, lors d'une baisse critique du niveau de la mer avant une première vague d'un tsunami, la mer se retire en dessous du niveau $L_L$ de la marée la plus basse durant une période de plusieurs minutes. Le niveau $L_2$ de l'eau dans le bassin d'aspiration 2 baisse d'abord très rapidement puisque l'eau reflue vers les conduits 7 à l'intérieur desquels le niveau d'eau tend à s'équilibrer avec le niveau $L_1$ de la mer. La mise à l'air rapide d'une grande partie de l'organe de contrepoids principal 97 du dispositif d'obturation 17 diminue fortement la poussée d'Archimède exercée sur cet organe et provoque une ouverture quasi complète du dispositif d'obturation, permettant au bassin de réserve 20 d'alimenter en eau le bassin d'aspiration 2 avec un débit d'eau limité mais prévu suffisant pour l'alimentation en eau des pompes de fonctionnement de production si celles-ci ne sont pas arrêtées. Le dispositif d'obturation 17 est prévu de façon à ce que le niveau $L_2$ se stabilise à une hauteur un peu en dessous du niveau des embouchures 7E des conduits 7, de façon à perdre le moins possible d'eau du bassin de réserve par les conduits 7. On notera que si le niveau $L_2$ remonte un peu, le dispositif d'obturation 17 pivote et referme un peu le passage d'eau 85, ce qui diminue le débit de telle sorte que le niveau $L_2$ peut se stabiliser comme représenté sur la FIG.21. Par ailleurs, il peut être avantageux de détecter l'état du niveau de la mer afin de vérifier que la baisse du niveau dans le bassin d'aspiration est causée par un retrait anormal de la mer. Dans ce cas, et si aucun tremblement de terre significatif précédant le tsunami n'est ressenti dans la centrale, il n'est pas nécessaire d'arrêter les pompes de fonctionnement de production dont l'alimentation en eau peut être poursuivie grâce au bassin de réserve jusqu'à ce que l'eau revienne dans le bassin d'aspiration par le ou les tunnels d'aspiration. Néanmoins, il peut être décidé à la conception de la centrale d'arrêter systématiquement les pompes de fonctionnement de production en cas de baisse anormale du niveau de l'eau dans le bassin d'aspiration, ce qui permet de limiter le volume nécessaire du bassin de réserve et donc le coût de la construction du bassin.

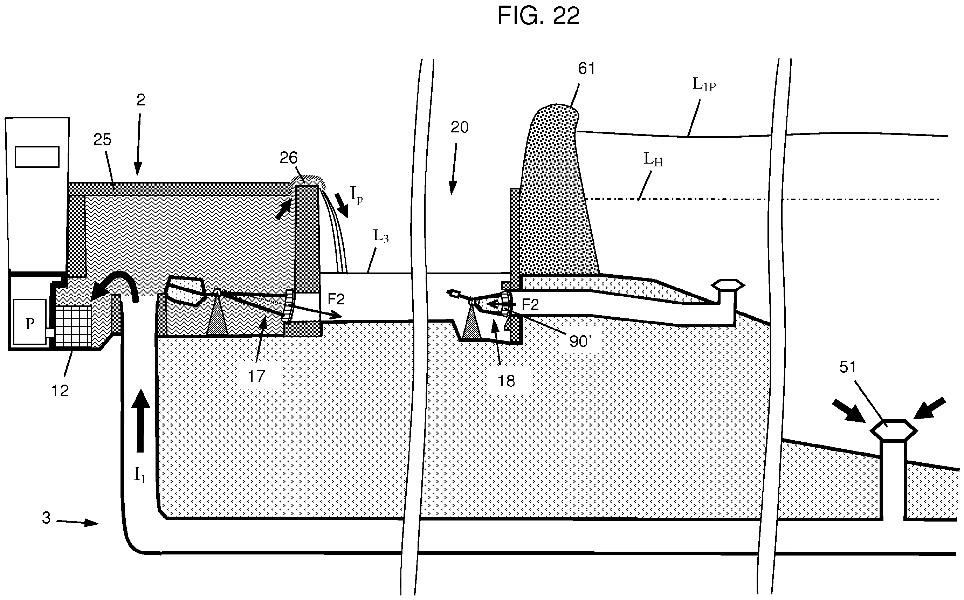

Lorsqu'arrive la première vague du tsunami, comme représenté sur la FIG.22, le niveau de la mer peut atteindre un niveau $L_{1P}$ situé plusieurs mètres au dessus du dispositif formant un couvercle 25 du bassin d'aspiration. L'eau dans le bassin d'aspiration remonte, ce qui provoque la fermeture du dispositif d'obturation 17. Une fois que l'eau dans le bassin d'aspiration a atteint le couvercle 25, un flux d'eau limité Ip peut être autorisé à sortir par des ouvertures calibrées 26 vers l'environnement extérieur. Ce flux Ip peut être canalisé vers le bassin de réserve 20 dont le niveau d'eau $L_3$ est encore loin de la capacité maximale du bassin. Le dispositif d'obturation 18 qui ferme le tunnel de secours 30 n'est pas déclenché en pivotement par la pression différentielle d'eau appliquée sur son organe d'obturation 90', puisque les efforts de pression résultent en un vecteur force F2 dirigé vers l'axe pivot 91'. Le fonctionnement de la centrale nucléaire peut être poursuivi dans cet état de raz de marée pendant la durée nécessaire pour que la mer revienne à son niveau normal, par exemple après une demi-heure environ.

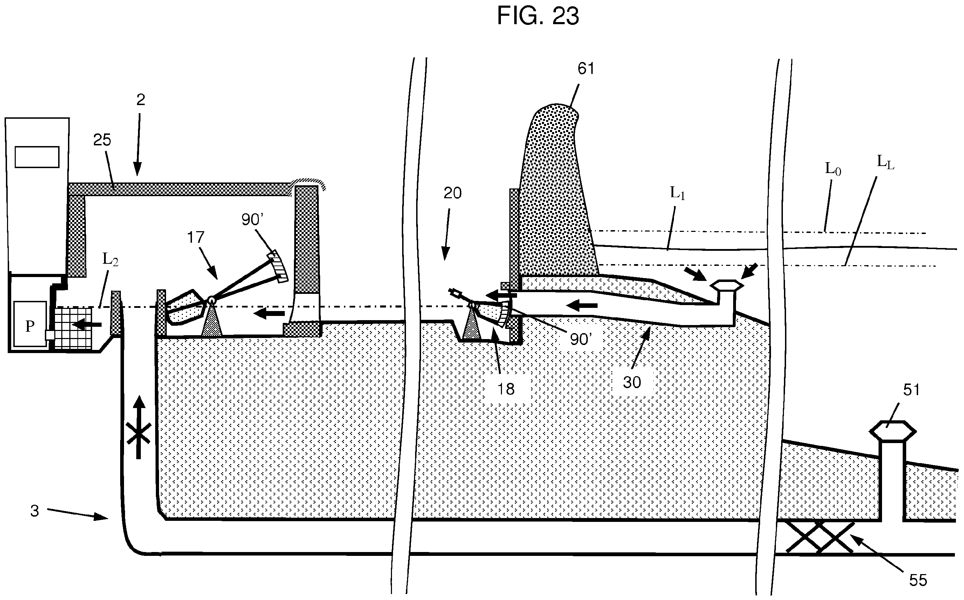

Comme représenté sur la FIG.23, un effondrement critique est survenu dans le ou les tunnels d'aspiration au niveau d'au moins une zone d'effondrement 55. Le niveau $L_2$ de l'eau dans le bassin d'aspiration 2 est descendu jusqu'à provoquer l'ouverture du dispositif d'obturation 17, ce qui a permis que le bassin de réserve 20 se vide en grande partie dans le bassin d'aspiration jusqu'à atteindre sensiblement le même niveau $L_2$. Durant ce temps de transfert d'eau, les pompes de fonctionnement de production de la station de pompage ont été être arrêtées pour commuter sur les pompes de fonctionnement de sauvegarde. Le flotteur du dispositif d'obturation 18 a émergé partiellement au dessus de la surface de l'eau, ce qui a provoqué une ouverture partielle du dispositif d'obturation et donc une alimentation du bassin de réserve 20 par le tunnel de secours 30. L'ouverture partielle du dispositif d'obturation 18 s'auto-ajuste à la consommation d'eau de la station de pompage, puisque si le niveau $L_2$ baisse de trop alors l'ouverture du dispositif d'obturation 18 augmente jusqu'à rétablir un niveau d'équilibre.

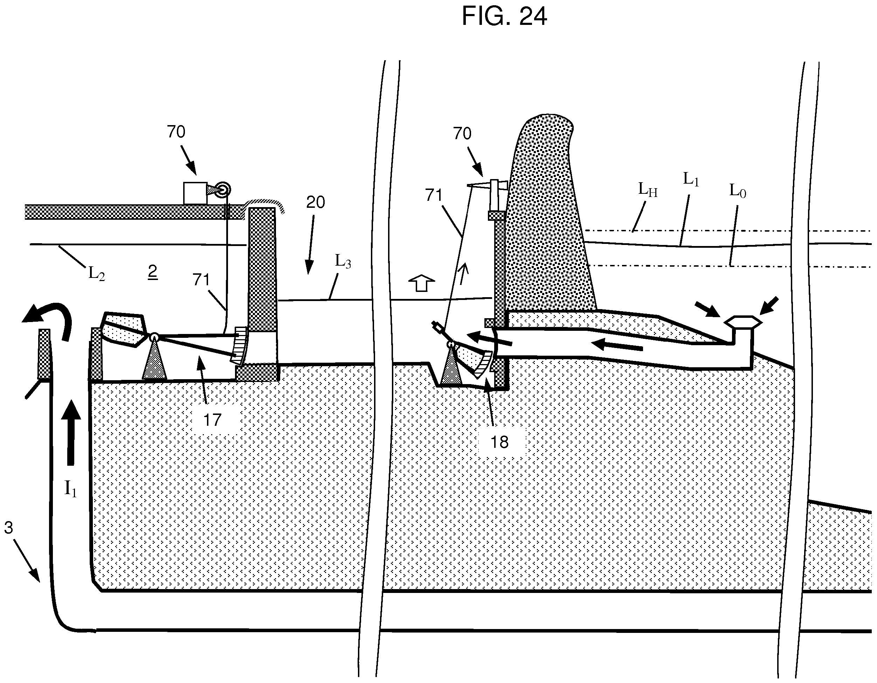

Comme représenté sur la FIG.24, de façon facultative, le pivotement d'un dispositif d'obturation 17 ou 18 pour son ouverture, et éventuellement aussi pour sa fermeture, peut être actionné par un dispositif de déclenchement 70 relié par exemple à un système de commande associé à au moins un système de détection du niveau de l'eau. Le dispositif de déclenchement 70 peut par exemple comprendre un treuil éventuellement sur une grue, agissant sur un câble 71 relié à la structure du dispositif d'obturation. Un tel dispositif de déclenchement a l'avantage de laisser le pivotement du dispositif d'obturation s'opérer de façon autonome en cas de non fonctionnement du treuil. Dans l'exemple représenté sur la FIG.24, une fois que le tunnel d'aspiration 3 est réparé et que le bassin d'aspiration 2 est normalement alimenté en eau, le dispositif de déclenchement agissant sur le dispositif d'obturation 18 est actionné de façon à forcer son ouverture pour effectuer un remplissage du bassin de réserve par le tunnel de secours 30 pendant que la mer est à marée haute. Par ailleurs, en reconsidérant la situation d'un effondrement critique du tunnel d'aspiration 3 en référence à la FIG.23, on notera que l'installation de dispositifs de déclenchement 70 comme représenté sur la FIG.24 permet de maintenir une ouverture complète des dispositifs d'obturation 17 et 18 si on souhaite augmenter le débit d'eau entre le tunnel de secours 30 et le bassin d'aspiration 2, ce qui peut permettre de redémarrer les pompes de fonctionnement de production.

Par ailleurs, il est envisageable de prévoir à la conception des moyens permettant de fixer le dispositif d'obturation 18 dans sa position de fermeture, ou de retirer le dispositif d'obturation 18 et de boucher le passage d'eau formé par le tunnel de secours 30. En effet, si après un retour d'expérience suffisant sur l'exploitation de centrales nucléaires alimentées en eau par des tunnels d'aspiration renforcés, il s'avérait qu'un effondrement critique dans un tunnel d'aspiration ne peut pas réduire le débit d'eau au point de gêner l'alimentation en eau des pompes de fonctionnement de sauvegarde, il pourrait être décidé de condamner de façon provisoire ou définitive le passage d'eau formé par le tunnel de secours. Dans cette hypothèse, il pourrait même être envisagé de se passer de tunnel de secours pour la construction de nouvelles installations d'amenée d'eau selon l'invention analogues à l'installation de la FIG.20. La proximité de la mer permet dans ce cas de prévoir des solutions d'urgence pour alimenter en eau le bassin de réserve 20 s'il en était besoin.

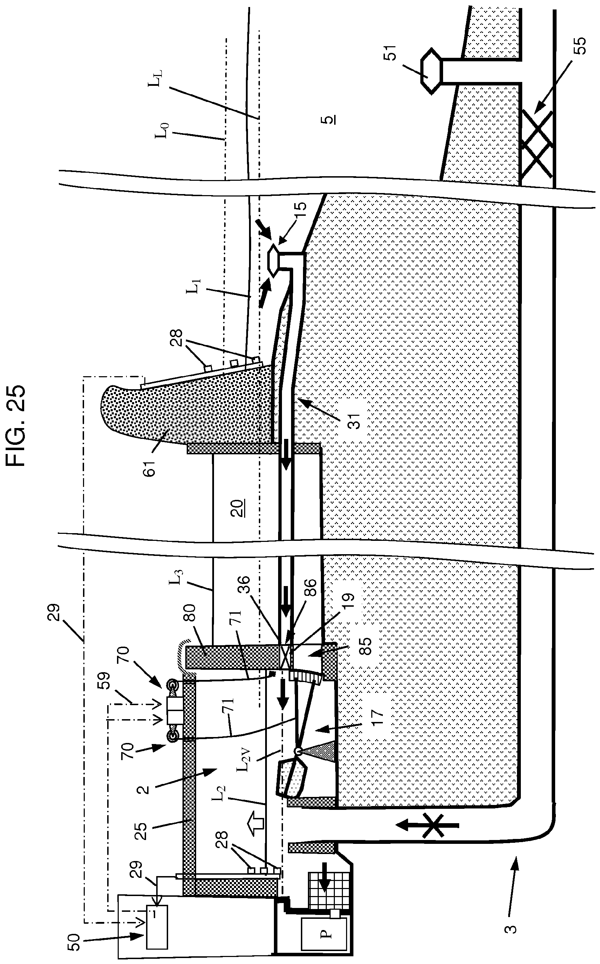

Comme représenté sur la FIG.25, un autre mode de réalisation d'une installation d'amenée d'eau selon l'invention est similaire au mode de réalisation décrit ci-dessus en référence à la FIG.23, et s'en distingue essentiellement en ce que le bassin d'aspiration 2 est directement alimenté en eau par un tunnel de secours 31 relié à au moins une entrée d'eau de secours 15 immergée dans la mer. Pour les besoins de la représentation schématique sur la FIG.25, le tunnel de secours 31 est représenté passant à l'intérieur du bassin de réserve 20 pour se terminer en un conduit horizontal 36 qui traverse une paroi du mur de barrage 80 séparant le bassin de réserve 20 du bassin d'aspiration 2. Le conduit horizontal 36 forme un passage d'eau 86 à une distance plus ou moins grande du passage d'eau 85 associé au dispositif d'obturation 17. Il pourra être préféré un tunnel de secours 31 qui ne croise pas le bassin de réserve 20. Par ailleurs, comme expliqué ci-dessus en référence à la FIG.24, le dispositif d'obturation 17 peut être associé à un dispositif de déclenchement 70 comprenant par exemple un treuil agissant sur un câble 71. Le dispositif de déclenchement 70 est relié ici à un système de commande 50 associé à plusieurs systèmes de détection du niveau de l'eau utilisant des capteurs d'eau 28 pour détecter en premier lieu si le niveau d'eau dans le bassin d'aspiration 2 descend d'une façon prédéterminée comme anormale, la mesure de la vitesse de la variation du niveau de l'eau pouvant être un paramètre de détermination d'une baisse anormale du niveau.

Afin d'obturer le passage d'eau 86 formé par le tunnel de secours 31, un dispositif d'obturation autonome tel que l'un ou l'autre des dispositifs d'obturation 9 et 16 décrits précédemment en référence à la FIG.17 et la FIG.19, peut être utilisé, puisque on se trouve dans la même configuration d'un bassin d'aspiration fermé qui doit pouvoir communiquer avec la mer par l'intermédiaire d'un tunnel de secours. Avec un tel dispositif d'obturation 9 ou 16, le déclenchement de l'ouverture du dispositif sera prévu pour un niveau d'eau $L_2$ plus élevé que le niveau prédéterminé $L_{2V}$ de déclenchement de l'ouverture du dispositif d'obturation 17 qui ferme le passage d'eau 85 entre le bassin d'aspiration et le bassin de réserve, de façon à ne quasiment pas utiliser l'eau du bassin de réserve hormis le cas d'un retrait anormal de la mer.

Un dispositif d'obturation autonome tel qu'un dispositif 9 ou 16 n'est néanmoins pas indispensable, et en particulier il est envisageable d'utiliser un dispositif d'obturation 19 dont l'ouverture s'effectue uniquement grâce à un dispositif de déclenchement. L'absence d'autonomie d'un dispositif d'obturation 19 ne compromet pas nécessairement la sécurité de l'installation, et en particulier il peut être prévu une redondance du dispositif de déclenchement affecté au dispositif d'obturation. En outre, le dispositif d'obturation 19 dans l'installation de la FIG.25 est préférablement destiné à s'ouvrir uniquement en cas d'effondrement critique dans le ou les tunnels d'aspiration 3, et est prévu pour s'ouvrir avant que le niveau $L_2$ de l'eau dans le bassin d'aspiration ait atteint le niveau prédéterminé $L_{2V}$ de déclenchement de l'ouverture du dispositif d'obturation 17. Par conséquent, en cas de disfonctionnement de la commande d'ouverture du dispositif d'obturation 19, le niveau $L_2$ de l'eau dans le bassin d'aspiration continue à baisser jusqu'au niveau prédéterminé $L_{2V}$, ce qui déclenche l'ouverture du dispositif d'obturation 17 par le dispositif de déclenchement 70 associé ou de façon autonome, pour alimenter le bassin d'aspiration par le bassin de réserve. Le volume d'eau du bassin de réserve 20 sera généralement suffisant pour alimenter pendant au moins deux heures les pompes de fonctionnement de sauvegarde, ce qui laisse le temps de rétablir une commande d'ouverture du dispositif d'obturation 19.

Afin d'ouvrir le dispositif d'obturation 19 uniquement en cas d'effondrement critique dans le ou les tunnels d'aspiration 3, il faut pouvoir déterminer de façon certaine qu'une baisse rapide du niveau $L_2$ de l'eau dans le bassin d'aspiration n'est pas due à un retrait de la mer. Pour ceci, le système de commande 50 peut être associé non seulement à un système de détection de la baisse du niveau de l'eau dans le bassin d'aspiration, mais également à un système de détection de la baisse du niveau de la mer. Chaque système de détection, comprenant par exemple des capteurs d'eau 28 sur différentes hauteurs pour mesurer le niveau d'eau, transmet des données 29 à un système d'analyse associé au système de commande 50. Le système d'analyse est prévu pour déterminer si le niveau de l'eau dans le bassin d'aspiration 2 descend d'une façon prédéterminée comme anormale et si le niveau de la mer n'a pas baissé anormalement. Si les deux conditions sont vérifiées, il est quasiment certain que le ou les tunnels d'aspiration ont subi un effondrement critique. Le système de commande 50 envoie alors une commande de déclenchement 59 à destination d'un dispositif de déclenchement 70 pour actionner l'ouverture du dispositif d'obturation 19, par exemple en tirant sur un câble 71 afin de déverrouiller un système de verrouillage de la fermeture du dispositif d'obturation 19. La commande de déclenchement 59 peut également commander la commutation des pompes de fonctionnement de production de la station de pompage sur les pompes de fonctionnement de sauvegarde. Comme représenté sur la FIG.25, une fois le dispositif d'obturation 19 ouvert, le tunnel de secours 31 alimente en eau le bassin d'aspiration 2, et le niveau $L_2$ de l'eau remonte pour se stabiliser quasiment au niveau $L_1$ de la mer. On notera que le passage d'eau 86 formé par le tunnel de secours 31 peut être abaissé par rapport à la représentation faite sur la FIG.25, et peut par exemple être situé au niveau du fond du bassin de réserve de même que le passage d'eau 85.

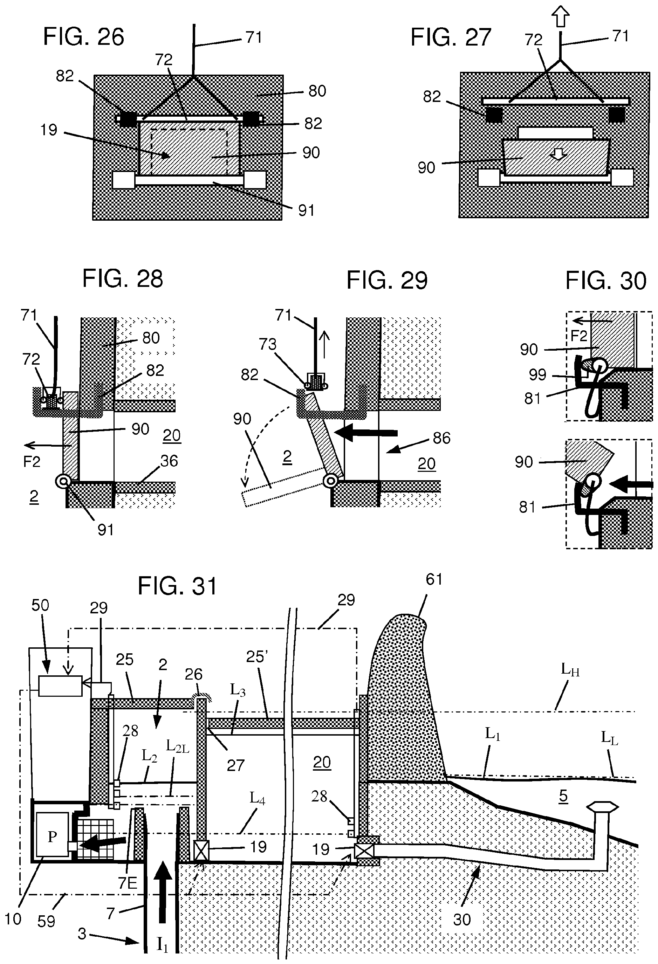

La FIG.26, ainsi que la FIG.27, la FIG.28 et la FIG.29, représentent différentes positions d'un même dispositif d'obturation 19 et sont commentées conjointement. Le dispositif d'obturation 19 représenté constitue un exemple de réalisation d'un dispositif d'obturation non autonome pouvant être utilisé dans le système d'amenée d'eau de l'installation d'amenée d'eau de la FIG.25. Sur la FIG.26 et la FIG.28, le dispositif d'obturation 19 est représenté dans sa position de fermeture. Le dispositif comprend un organe d'obturation 90 sous la forme d'un panneau d'étanchéité généralement plan apte à pivoter par rapport à un axe pivot 91. Le panneau 90 ferme le passage d'eau 86 formé sur une paroi du mur de barrage 80. La position de fermeture est maintenue par un système de verrouillage comprenant des crochets 82 fixés au mur 80 et une barre de verrouillage 72 interposée entre les crochets 82 et une partie d'extrémité libre du panneau 90. La barre de verrouillage 72 est reliée à au moins un câble 71 pouvant être tiré par un dispositif de déclenchement 70 tel que décrit ci-dessus. Des rouleaux 73 peuvent être prévus de part et d'autre de la barre de verrouillage 72 de façon à faciliter le déplacement de la barre en cas de déverrouillage du dispositif

Comme représenté sur la FIG.27 et la FIG.29, l'actionnement d'un câble 71 tire la barre de verrouillage 72 vers le haut de façon à ne plus retenir le pivotement du panneau d'étanchéité 90 sous l'effet de la pression différentielle d'eau s'appliquant sur la face du panneau du côté du bassin de réserve 20. Le panneau 90 est conçu pour pivoter sur au moins 90° afin de libérer complètement le passage d'eau 86 formé par le tunnel de secours. Comme représenté sur la FIG.30, il peut être prévu que l'axe pivot 91 du panneau d'étanchéité 90 soit formé par une barre 99 présentant sur sa longueur une arête ayant par exemple un profil ovale, la barre 99 étant est mise en appui contre une surface concave d'un organe palier 81 parallèle à la barre 99 et fixé au mur 80. Les profils de l'arête de la barre 99 et de la surface concave de l'organe palier 81 seront formés de façon à permettre le pivotement du panneau sur au moins 90° sans coincement ou frottement excessif.

Sur la FIG.31, un autre mode de réalisation d'une installation d'amenée d'eau analogue à celle de la FIG.20 utilise exclusivement des dispositifs d'obturation 19 non autonomes, c'est à dire dont l'ouverture s'effectue uniquement grâce à un dispositif de déclenchement. Le système de commande 50 est apte à commander individuellement l'ouverture de chaque dispositif d'obturation 19, et est associé à des systèmes de détection de la baisse du niveau de l'eau dans le bassin d'aspiration 2 et dans le bassin de réserve 20 utilisant des capteurs de présence d'eau 28. Un dispositif d'obturation 19 peut être à ouverture non réversible, c'est-à-dire que comme pour le dispositif 19 décrit précédemment il n'est pas possible de refermer l'organe d'obturation 90 sans une opération particulière après son ouverture. Un dispositif d'obturation 19 peut également être à ouverture réversible, comme c'est par exemple le cas d'une vanne papillon ou d'une vanne à porte à relevage.

En cas de baisse anormale du niveau $L_2$ de l'eau dans le bassin d'aspiration, le premier dispositif d'obturation 19, situé entre le bassin d'aspiration 2 et le bassin de réserve 20, est commandé pour s'ouvrir alors que le deuxième dispositif d'obturation 19 qui ferme le tunnel de secours 30 reste fermé. La commande de déclenchement 59 commande également la commutation des pompes de fonctionnement de production de la station de pompage sur les pompes de fonctionnement de sauvegarde. La section du passage d'eau ouvert par le premier dispositif d'obturation 19 est prévu suffisamment petite pour que le niveau $L_3$ de l'eau dans le bassin de réserve 20 ne descende pas trop vite, mais doit assurer un débit suffisant par exemple entre 5 m3 et 15 m3 par seconde pour que pendant l'arrêt des pompes de fonctionnement de production le niveau $L_2$ de l'eau dans le bassin d'aspiration 2 reste assez peu en dessous du niveau de l'embouchure 7E d'un conduit 7 reliant le bassin d'aspiration au tunnel d'aspiration 3. Le volume de l'eau dans le bassin de réserve 20 est prévu suffisant pour que si la baisse anormale du niveau $L_2$ est due à un retrait de la mer, l'alimentation en eau des pompes de fonctionnement de sauvegarde est assurée jusqu'au retour de la mer au dessus de son niveau $L_L$ de plus basse marée, et le niveau d'eau dans le bassin de réserve 20 reste au dessus d'un niveau $L_4$ de déclenchement du deuxième dispositif d'obturation 19. Le bassin de réserve 20 est couvert par un dispositif formant un couvercle 25' muni d'au moins une ouverture calibrée 27, en particulier dans le cas d'un dispositif d'obturation 19 à ouverture non réversible, de façon à éviter un débordement du bassin de réserve avec inondation de la centrale en cas de tsunami.

Si la baisse anormale du niveau $L_2$ est due à un effondrement critique dans le ou les tunnels d'aspiration 3, le niveau d'eau dans le bassin de réserve 20 descend relativement lentement jusqu'au niveau $L_4$ de déclenchement du deuxième dispositif d'obturation 19, et le système de détection de la baisse du niveau de l'eau dans le bassin de réserve 20 provoque une commande de déclenchement 59 pour ouvrir ce deuxième dispositif d'obturation. Par précaution, il est possible de commander l'ouverture du deuxième dispositif d'obturation avant que le niveau $L_4$ soit atteint, dès lors que l'effondrement critique dans un tunnel 3 est certain. Le bassin de réserve est alors alimenté en eau par le tunnel de secours 30. Le niveau $L_2$ de l'eau dans le bassin d'aspiration 2 et le niveau $L_3$ de l'eau le bassin de réserve 20 remontent sensiblement jusqu'au niveau $L_1$ de la mer. Le fonctionnement de la station de pompage de la centrale nucléaire dans un mode de sauvegarde est ainsi assuré, y compris dans le cas où surviendrait un nouvel événement de type tsunami.

En alternative au mode de réalisation ci-dessus, il est également possible de relier directement le tunnel de secours 30 au bassin d'aspiration 2. L'ouverture du deuxième dispositif d'obturation 19 associé au tunnel de secours 30 serait alors commandée dès lors qu'il est certain que le ou les tunnels d'aspiration 3 sont relativement bouchés. Par ailleurs, un dispositif d'obturation non autonome tel que le dispositif d'obturation 19 décrit ci-dessus en référence aux figures 26 à 30 peut être utilisé à la place d'un dispositif d'obturation autonome dans un système d'amenée d'eau sans bassin de réserve, par exemple tel que le système d'amenée d'eau décrit précédemment en référence à la FIG.17, au lieu du dispositif de clapet 9. Dans ce cas, si le dispositif d'obturation 19 doit un jour être ouvert, il faudra remonter le dispositif en position fermée avant de redémarrer les pompes de fonctionnement de production une fois que le ou les tunnels d'aspiration 3 sont opérationnels, afin de ne pas réchauffer l'eau venant d'un tunnel d'aspiration par l'eau venant d'un tunnel de secours 30.

Une installation d'amenée d'eau selon l'invention peut être destinée à équiper une centrale nucléaire séparée du bord de mer par une zone littorale non constructible ou encore par une large bande de dunes ou autres reliefs qui redescendent à l'altitude du niveau zéro de la mer voire en dessous à mesure que l'on rentre dans les terres. Il est entendu qu'un bassin d'aspiration de l'installation doit être formé de façon à ce que le fond du bassin se situe sous le niveau zéro de la mer et au moins quelques mètres sous le niveau des plus basses marées pour les mers présentant des marées. En fonction de la constructibilité et/ou de la topologie du terrain en bord de mer, il est envisageable d'implanter la centrale nucléaire sur un site jusqu'à une certaine distance du bord de mer, par exemple jusqu'à environ cinq kilomètres étant donné notamment l'augmentation du coût de construction d'un tunnel d'aspiration de l'installation avec la longueur du tunnel.

Si le bord de mer est sujet à un risque de raz de marée exceptionnel comme un tsunami, une centrale nucléaire ayant une installation d'amenée d'eau telle que l'une ou l'autre des installations décrites précédemment en référence aux figures 17 à 31 peut être installée à distance du bord de mer en allongeant en conséquence chaque tunnel d'aspiration et chaque tunnel de secours. Dans d'autres cas, en l'absence de risque de raz de marée exceptionnel, une installation d'amenée d'eau telle que décrite précédemment en référence à la FIG.17, mais sans dispositif de couvercle du bassin d'aspiration, pourra également être utilisée.

Pour des raisons de coûts de construction et de maintenance de l'installation d'amenée d'eau, ou de sécurité en particulier dans des régions à risques sismiques, il peut être avantageux de se passer d'un tunnel de secours pour une telle centrale installée à distance du bord de mer, dès lors qu'on dispose d'une source d'eau auxiliaire telle que par exemple une rivière ou un lac. Dans pareil cas, il peut être prévu une réserve d'eau de secours comprenant un bassin de réserve pouvant alimenter le bassin d'aspiration de l'installation par un système d'amenée d'eau additionnelle tel que décrit précédemment.

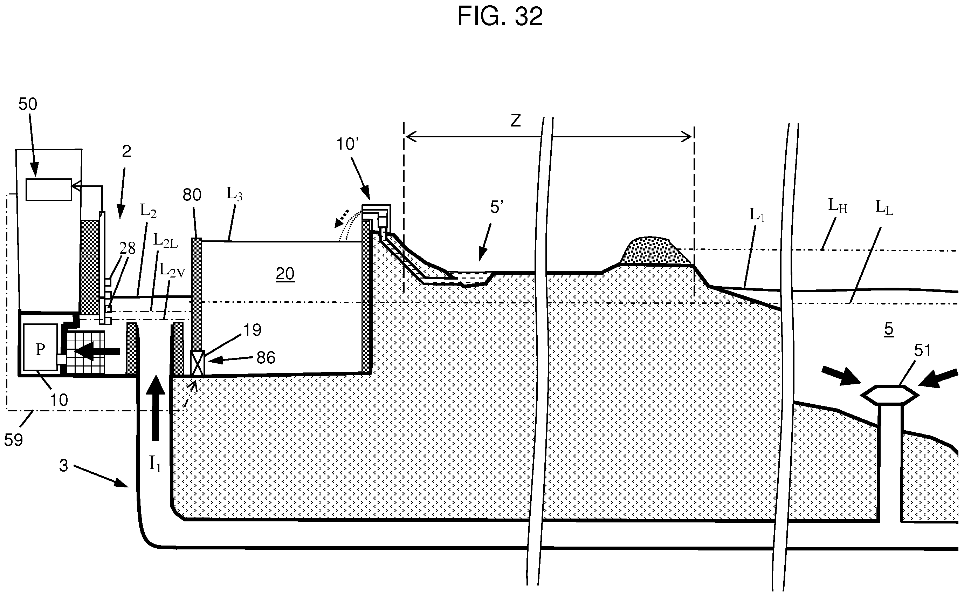

Comme représenté sur la FIG.32, une telle réalisation d'une installation d'amenée d'eau selon l'invention, destinée à une centrale nucléaire séparée du bord de mer par une zone littorale non constructible Z, comprend un bassin de réserve 20 pouvant communiquer avec le bassin d'aspiration 2 par un passage d'eau 86 formé dans un mur de séparation 80 des deux bassins. Le passage d'eau 86 est fermé ici par un dispositif d'obturation 19 non autonome, commandé par un système de commande 50 associé à un système de détection de la baisse du niveau de l'eau dans le bassin d'aspiration. En alternative, un dispositif d'obturation autonome tel que l'un ou l'autre des dispositifs d'obturation à sécurité passive 9, 16, 17, et 18 décrits précédemment peut être utilisé. Quel que soit le dispositif d'obturation, il faut que dispositif s'ouvre en cas de baisse anormale du niveau $L_2$ de l'eau dans le bassin d'aspiration, et au plus tard quand le niveau d'eau $L_2$ est descendu en dessous du niveau de plus basse marée $L_{2L}$ jusqu'à atteindre le niveau prédéterminé de déclenchement $L_{2V}$.

Dans la réalisation représentée, des capteurs d'eau 28 permettent de mesurer la vitesse de la variation du niveau de l'eau. Si la baisse du niveau s'effectue à une vitesse dépassant un seuil prédéterminé supérieur à la plus grande vitesse connue de variation normale du niveau de la marée, cet évènement est caractéristique d'une condition anormale signifiant soit un relatif bouchage du ou des tunnels d'aspiration 3 soit un retrait anormal de la mer. Une fois la condition anormale détectée, le système de commande 50 envoie une commande de déclenchement 59 à destination d'un dispositif de déclenchement, non représenté sur la figure, pour actionner l'ouverture du dispositif d'obturation 19. Le système de commande 50 commande également l'arrêt de la production électrique de la ou des tranches nucléaires associées au bassin d'aspiration 2, et la commutation des pompes de fonctionnement de production de la station de pompage 10 sur les pompes de fonctionnement de sauvegarde.

Dans une situation de fonctionnement normal de la centrale en production électrique comme représenté sur la FIG.32, le dispositif d'obturation 19 ferme le passage d'eau 86 et empêche donc l'eau du bassin d'aspiration d'être réchauffée par l'eau du bassin de réserve quand cette dernière est plus chaude, notamment en été. Le niveau $L_3$ de l'eau dans le bassin de réserve 20 est maintenu relativement constant et proche d'un niveau de remplissage complet du bassin, par exemple à une hauteur dépassant le niveau $L_H$ des plus hautes marées de façon à ce qu'en cas de fortes pluies le surplus d'eau du bassin de réserve déborde vers le bassin d'aspiration 2 dont le niveau $L_2$ est plus bas. Le volume d'eau du bassin de réserve est prévu suffisant pour alimenter les pompes de fonctionnement de sauvegarde pendant une durée de sécurité prédéfinie après l'arrêt des pompes de fonctionnement de production, par exemple au moins quatre heures.

Pendant la durée de sécurité prédéfinie, et selon une procédure préétablie, des dispositions sont rapidement mises en place pour alimenter en eau le bassin de réserve, ou directement le bassin d'aspiration, par une source d'eau auxiliaire comme par exemple une rivière 5'. Le débit moyen de l'eau pouvant être prélevée de la source auxiliaire doit être supérieur ou égal au débit d'aspiration des pompes de fonctionnement de sauvegarde. Par exemple, un prélèvement d'eau assurant un débit moyen d'au moins 5 m3 d'eau par seconde est généralement suffisant dans la plupart des centrales nucléaires pour assurer les besoins d'alimentation en eau d'une station de pompage d'une tranche nucléaire dont la production électrique est arrêtée.

Le prélèvement de l'eau de la rivière 5' peut s'effectuer par exemple à partir d'une station de pompage auxiliaire 10' située en bordure du bassin de réserve 20 et reliée à la rivière 5' par une canalisation souterraine. Le démarrage des pompes de la station de pompage auxiliaire 10' est avantageusement prévu pour s'effectuer peu après l'ouverture du dispositif d'obturation 19, afin de maintenir dans le bassin de réserve 20 un niveau $L_3$ proche du niveau de remplissage complet du bassin. De cette façon, même à supposer qu'un problème survienne à plus ou moins long terme dans le prélèvement de l'eau de la rivière 5', par exemple à cause d'une panne dans la station de pompage auxiliaire 10', le personnel de la centrale dispose d'une période de plusieurs heures pour prendre des mesures appropriées de façon à rétablir une alimentation en eau suffisante pour les pompes de fonctionnement de sauvegarde.

**Revendications**

1. Installation d'amenée d'eau pour au moins un circuit de refroidissement (11) à échangeur de chaleur (13) d'une centrale nucléaire (1), comprenant :

   un bassin d'aspiration (2) à partir duquel au moins une station de pompage (10) de la centrale est apte à aspirer de l'eau pour la faire circuler dans un dit circuit de refroidissement (11) ; et

   au moins un tunnel d'aspiration (3) relié à au moins une entrée d'eau principale (51, 52) immergée dans une étendue d'eau (5) telle qu'une mer, un lac ou un fleuve, ledit tunnel d'aspiration (3) étant apte à alimenter en eau le bassin d'aspiration (2) de façon à maintenir un niveau d'eau ($L_2$) suffisant dans le bassin d'aspiration (2) pour le fonctionnement de ladite au moins une station de pompage (10) ;

   **caractérisée en ce qu'**elle comprend en outre un système d'amenée d'eau additionnelle distinct dudit au moins un tunnel d'aspiration (3) et apte à amener de l'eau dans le bassin d'aspiration (2) à partir d'au moins une réserve d'eau de secours (60, 5, 20), ledit système d'amenée d'eau additionnelle comprenant au moins un passage d'eau (65, 30, 31, 85, 86) reliant le bassin d'aspiration (2) à une dite réserve d'eau de secours (60, 5, 20) et un dispositif d'obturation (9, 16, 17, 18, 19) fermant ledit passage d'eau, le dispositif d'obturation étant apte à ouvrir au moins partiellement ledit passage d'eau si le niveau d'eau dans le bassin d'aspiration (2) descend d'une façon prédéterminée comme anormale, afin que le bassin d'aspiration (2) soit alimenté en eau par ledit système d'amenée d'eau additionnelle si l'alimentation en eau par ledit au moins un tunnel d'aspiration (3) devient insuffisante.

2. Installation d'amenée d'eau selon la revendication 1, dans laquelle ladite étendue d'eau (5) constitue une dite réserve d'eau de secours.

3. Installation d'amenée d'eau selon la revendication 2, dans laquelle ladite étendue d'eau (5) est une mer, et ledit système d'amenée d'eau additionnelle (620, 65, 9) est disposé entre le bassin d'aspiration (2) et une partie (60) d'un chenal (6) qui communique avec la mer (5).

4. Installation d'amenée d'eau selon la revendication 2, dans laquelle ledit système d'amenée d'eau additionnelle comprend un tunnel de secours (30) relié à au moins une entrée d'eau de secours (15) immergée dans ladite étendue d'eau (5), ladite entrée d'eau de secours (15) étant disposée à une hauteur ($H_E$) d'au moins dix mètres au dessus d'une dite entrée d'eau principale (51).

5. Installation d'amenée d'eau selon la revendication 1 ou 4, dans laquelle une dite réserve d'eau de secours comprend un bassin de réserve (20) contenant un volume d'eau qui reste substantiellement inchangé pendant une alimentation normale en eau du bassin d'aspiration (2) par ledit au moins un tunnel d'aspiration (3).

6. Installation d'amenée d'eau selon l'une quelconque des revendications 1 à 5, dans laquelle ladite au moins une entrée d'eau principale (51, 52) est disposée à une certaine profondeur (H) par rapport à un niveau moyen de référence ($L_0$) de ladite étendue d'eau (5), ladite profondeur (H) étant déterminée de façon à ce que l'eau arrivant dans le bassin d'aspiration (2) ait pendant au moins une période de l'année une température maximale inférieure d'au moins 4°C par rapport à une température maximale de l'eau à la surface de ladite étendue d'eau (5).

7. Installation d'amenée d'eau selon l'une quelconque des revendications 1 à 6, dans laquelle ledit dispositif d'obturation (9, 16, 17, 18, 19) comprend un organe d'obturation (90, 90') apte à pivoter par rapport à un axe pivot (91, 91', 98) afin d'ouvrir ledit passage d'eau (65, 30, 31, 85, 86).

8. Installation d'amenée d'eau selon la revendication 7, dans laquelle ledit dispositif d'obturation (9, 16, 17, 18) est adapté de façon à ce qu'un pivotement dudit organe d'obturation (90, 90') s'opère de façon autonome en fonction d'une baisse du niveau d'eau

($L_2$) dans le bassin d'aspiration (2).

9. Installation d'amenée d'eau selon la revendication 7 ou 8, dans laquelle un pivotement dudit organe d'obturation (90, 90') est actionné par un dispositif de déclenchement (70, 71) relié à un système de commande (50) apte à générer une commande de déclenchement (59) à destination du dispositif de déclenchement, le système de commande (50) étant associé à un système d'analyse recevant des données (29) fournies par un dispositif de mesure (28) du niveau d'eau ($L_2$) dans le bassin d'aspiration (2), ledit système d'analyse étant apte à déterminer si le niveau d'eau ($L_2$) dans le bassin d'aspiration (2) descend d'une façon prédéterminée comme anormale.

10. Installation d'amenée d'eau selon la revendication 9 prise en combinaison avec la revendication 8, dans laquelle ledit dispositif de déclenchement (70, 71) est adapté pour laisser ledit pivotement dudit organe d'obturation (90, 90') être opéré de façon autonome par ledit dispositif d'obturation (9, 16 17, 18) en cas de non fonctionnement du dispositif de déclenchement (70, 71).

11. Installation d'amenée d'eau selon la revendication 8 ou 10, dans laquelle ledit organe d'obturation (90) pivote pour ouvrir ledit passage d'eau (65, 30, 31, 85) lorsque une différence de hauteur ($\Delta h$) entre le niveau d'eau ($L_1$, $L_3$) dans la réserve d'eau de secours (60, 5, 20) et le niveau d'eau ($L_2$) dans le bassin d'aspiration (2) dépasse un seuil prédéterminé ($\Delta hV$).

12. Installation d'amenée d'eau selon l'une quelconque des revendications 8 à 11, dans laquelle ledit dispositif d'obturation (9, 17, 18) comprend un dispositif de contrepoids (92, 93, 94, 97) disposé sur un côté opposé à l'organe d'obturation (90, 90') par rapport audit axe pivot (91, 91'), ledit dispositif de contrepoids comprend un organe de contrepoids principal (92, 97) situé à une distance fixe dudit axe pivot (91, 91'), et ledit organe de contrepoids principal (92, 97) pèse entre 80% et 200% du poids dudit organe d'obturation (90, 90').

13. Installation d'amenée d'eau selon l'une quelconque des revendications 8 à 12, dans laquelle ledit dispositif d'obturation (16, 17, 18) comprend un dispositif de flotteur (96, 97, 98) disposé de façon à être complètement immergé dans l'eau pendant une alimentation normale en eau par ledit au moins un tunnel d'aspiration (3) et à émerger au moins en partie si le niveau d'eau ($L_2$) dans le bassin d'aspiration (2) descend en dessous d'un niveau prédéterminé de plus basse marée ($L_{2L}$) jusqu'à atteindre un niveau prédéterminé de déclenchement ($L_{2V}$), ledit dispositif de flotteur (96, 97, 98) étant adapté pour provoquer un pivotement dudit organe d'obturation (90, 90') une fois que ledit niveau de déclenchement ($L_{2V}$) est atteint.

14. Centrale nucléaire comprenant une installation d'amenée d'eau selon la revendication 1, dans laquelle le bassin d'aspiration (2) est couvert par un dispositif formant un couvercle (25) essentiellement étanche à l'eau, et au moins une ouverture calibrée (26) est réalisée dans le dispositif formant un couvercle (25) ou à proximité, de façon à laisser passer un flux d'eau limité (Ip) vers l'extérieur du bassin d'aspiration (2) en cas de débordement du bassin d'aspiration (2) dû à une montée des eaux inhabituelle de ladite étendue d'eau (5), la centrale nucléaire comprenant en outre au moins un puits de rejet (14) alimentant en eau un tunnel de rejet (4), ledit puits de rejet (14) étant également muni d'un dispositif formant un couvercle avec au moins une ouverture calibrée de façon à laisser passer un flux d'eau limité vers l'extérieur en cas de débordement du puits de rejet (14).

15. Centrale nucléaire selon la revendication 14, dans laquelle une dite réserve d'eau de secours comprend un bassin de réserve (20) ouvert par le haut sur l'extérieur et contenant un volume d'eau qui reste substantiellement inchangé pendant une alimentation normale en eau du bassin d'aspiration (2) par ledit au moins un tunnel d'aspiration (3), et dans laquelle au moins une dite ouverture calibrée (26) aboutit dans ledit bassin de réserve (20) de façon à y recueillir ledit flux d'eau limité (Ip).

**Patentansprüche**

1. Vorrichtung zur Wasserzufuhr für mindestens einen Kühlkreislauf (11) mit Wärmetauscher (13) eines Kernkraftwerks (1), umfassend:

ein Ansaugbecken (2), von dem aus mindestens eine Pumpstation (10) des Kraftwerks in der Lage ist, Wasser anzusaugen, um es in einem Kühlkreislauf (11) zirkulieren zu lassen, und mindestens einen Ansaugtunnel (3), der mit mindestens einem Hauptwassereinlass (51, 52), der in einem Gewässer (5) wie beispielsweise einem Meer, einem See oder einem Fluss versenkt ist, verbunden ist, wobei der Ansaugtunnel (3) in der Lage ist, das Ansaugbecken (2) so mit Wasser zu versorgen, dass im Ansaugbecken (2) ein ausreichender Wasserpegel ($L_2$) für den Betrieb der mindestens einen Pumpstation (10) aufrechterhalten wird, **dadurch gekennzeichnet, dass** sie darüber hinaus ein System zur Zusatzwasserzufuhr umfasst, das von dem mindestens einen Ansaugtunnel (3) verschieden ist und in der Lage ist, dem Ansaugbecken (2) Wasser aus mindestens einem Notwasservorrat (60, 5, 20) zuzuführen, wobei das System zur Zusatzwasserzufuhr mindestens einen Wasserdurchlass (65, 30, 31, 85, 86) umfasst, der das Ansaugbecken (2) mit einem Notwasservorrat (60, 5, 20) verbindet, und eine Verschlusseinrichtung (9, 16, 17, 18, 19), die den Wasserdurchlass verschließt, wobei die Verschlusseinrichtung in der Lage ist, den Wasserdurchlass mindestens teilweise zu öffnen, wenn der Wasserpegel im Ansaugbecken (2) auf eine als anomal vorgegebene Weise sinkt, damit das Ansaugbecken (2) von diesem System zur Zusatzwasserzufuhr mit Wasser versorgt wird, wenn die Versorgung mit Wasser durch den mindestens einen Ansaugtunnel (3) unzureichend wird.

2. Vorrichtung zur Wasserzufuhr nach Anspruch 1, wobei das Gewässer (5) einen Notwasservorrat darstellt.

3. Vorrichtung zur Wasserzufuhr nach Anspruch 2, wobei das Gewässer (5) ein Meer ist und das System zur Zusatzwasserzufuhr (620, 65, 9) zwischen dem Ansaugbecken (2) und einem Teil (60) eines Kanals (6), der mit dem Meer (5) in Verbindung steht, angeordnet ist.

4. Vorrichtung zur Wasserzufuhr nach Anspruch 2, wobei das System zur Zusatzwasserzufuhr einen Nottunnel (30) umfasst, der mit mindestens einem Notwassereinlass (15), der in dem Gewässer (5) versenkt ist, verbunden ist, wobei der Notwassereinlass (15) auf einer Höhe ($H_E$) von mindestens zehn Metern über einem Hauptwassereinlass (51) angeordnet ist.

5. Vorrichtung zur Wasserzufuhr nach Anspruch 1 oder 4, wobei ein Notwasservorrat ein Vorratsbecken (20) umfasst, das eine Wassermenge enthält, die während einer normalen Versorgung des Ansaugbeckens (2) mit Wasser durch den mindestens einen Ansaugtunnel (3) im Wesentlichen unverändert bleibt.

6. Vorrichtung zur Wasserzufuhr nach einem beliebigen der Ansprüche 1 bis 5, wobei der mindestens eine Hauptwassereinlass (51, 52) auf einer bestimmten Tiefe (H) in Bezug auf einen mittleren Referenzpegel ($L_0$) des Gewässers (5) angeordnet ist, wobei die Tiefe (H) so bestimmt wird, dass das in das Ansaugbecken (2) gelangende Wasser während mindestens eines Zeitraums des Jahres eine maximale Temperatur hat, die um mindestens 4°C unter einer maximalen Temperatur des Wassers an der Oberfläche des Gewässers (5) liegt.

7. Vorrichtung zur Wasserzufuhr nach einem beliebigen der Ansprüche 1 bis 6, wobei die Verschlusseinrichtung (9, 16, 17, 18, 19) ein Verschlussorgan (90, 90') umfasst, das in der Lage ist, in Bezug auf eine Schwenkachse (91, 91', 98) zu schwenken, um den Wasserdurchlass (65, 30, 31, 85, 86) zu öffnen.

8. Vorrichtung zur Wasserzufuhr nach Anspruch 7, wobei die Verschlusseinrichtung (9, 16, 17, 18) so angepasst ist, dass ein Schwenken des Verschlussorgans (90, 90') in Abhängigkeit von einem Sinken des Wasserpegels ($L_2$) im Ansaugbecken (2) selbsttätig erfolgt.

9. Vorrichtung zur Wasserzufuhr nach Anspruch 7 oder 8, wobei ein Schwenken des Verschlussorgans (90, 90') durch eine Auslöseeinrichtung (70, 71) betätigt wird, die mit einem Steuerungssystem (50) verbunden ist, das in der Lage ist, einen an die Auslöseeinrichtung gerichteten Auslösebefehl (59) zu erzeugen, wobei das Steuerungssystem (50) mit einem Analysesystem kombiniert ist, das Daten (29) empfängt, die von einer Einrichtung (28) zum Messen des Wasserpegels ($L_2$) im Ansaugbecken (2) bereitgestellt werden, wobei das Analysesystem in der Lage ist, zu bestimmen, ob der Wasserpegel ($L_2$) im Ansaugbecken (2) auf eine als anomal vorgegebene Weise sinkt.

10. Vorrichtung zur Wasserzufuhr nach Anspruch 9 in Kombination mit Anspruch 8, wobei die Auslöseeinrichtung (70, 71) so angepasst ist, dass sie das Schwenken des Verschlussorgans (90, 90') von der Verschlusseinrichtung (9, 16 17, 18) selbsttätig vornehmen lässt, wenn die Auslöseeinrichtung (70, 71) nicht funktioniert.

11. Vorrichtung zur Wasserzufuhr nach Anspruch 8 oder 10, wobei das Verschlussorgan (90) schwenkt, um den Wasserdurchlass (65, 30, 31, 85) zu öffnen, wenn eine Höhendifferenz ($\Delta h$) zwischen dem Wasserpegel ($L_1$, $L_3$) im Notwasservorrat (60, 5, 20) und dem Wasserpegel ($L_2$) im Ansaugbecken (2) einen vorgegebenen Schwellenwert ($\Delta hV$) überschreitet.

12. Vorrichtung zur Wasserzufuhr nach einem beliebigen der Ansprüche 8 bis 11, wobei die Verschlusseinrichtung (9, 17, 18) eine Gegengewichtseinrichtung (92, 93, 94, 97) umfasst, die auf einer zum Verschlussorgan (90, 90') entgegengesetzten Seite in Bezug auf die Schwenkachse (91, 91') angeordnet ist, wobei die Gegengewichtseinrichtung ein Hauptgegengewichtsorgan (92, 97) umfasst, das sich in einem festen Abstand von der Schwenkachse (91, 91') befindet, und das Hauptgegengewichtsorgan (92, 97) zwischen 80% und 200% des Gewichts des Verschlussorgans (90, 90') wiegt.

**13.** Vorrichtung zur Wasserzufuhr nach einem beliebigen der Ansprüche 8 bis 12, wobei die Verschlusseinrichtung (16, 17, 18) eine Schwimmereinrichtung (96, 97, 98) umfasst, die so angeordnet ist, dass sie während einer normalen Versorgung mit Wasser durch den mindestens einen Ansaugtunnel (3) vollständig im Wasser versenkt ist und mindestens teilweise auftaucht, wenn der Wasserpegel (L$_2$) im Ansaugbecken (2) unter einen vorgegebenen niedrigsten Gezeitenwasserstand (L$_{2L}$) sinkt, bis ein vorgegebener Auslösepegel (L$_{2V}$) erreicht ist, wobei die Schwimmereinrichtung (96, 97, 98) so angepasst ist, dass sie ein Schwenken der Verschlusseinrichtung (90, 90') bewirkt, sobald der Auslösepegel (L$_{2V}$) erreicht ist.

**14.** Kernkraftwerk mit einer Vorrichtung zur Wasserzufuhr nach Anspruch 1, wobei das Ansaugbecken (2) von einer Einrichtung abgedeckt wird, die eine im Wesentlichen wasserdichte Abdeckung (25) bildet, und mindestens eine kalibrierte Öffnung (26) in der eine Abdeckung (25) bildenden Einrichtung oder in der Nähe ausgeführt ist, so dass im Fall des Überlaufens des Ansaugbeckens (2) aufgrund eines ungewöhnlichen Anstiegs des Wassers des Gewässers (5) eine begrenzte Wassermenge (I$_p$) nach außerhalb des Ansaugbeckens (2) durchgelassen wird, wobei das Kernkraftwerk darüber hinaus mindestens einen Schluckbrunnen (14) umfasst, der einen Schlucktunnel (4) mit Wasser versorgt, wobei der Schluckbrunnen (14) ebenfalls mit einer Einrichtung versehen ist, die eine Abdichtung mit mindestens einer kalibrierten Öffnung bildet, so dass im Fall des Überlaufens des Schluckbrunnens (14) eine begrenzte Wassermenge nach außerhalb durchgelassen wird.

**15.** Kernkraftwerk nach Anspruch 14, wobei ein Notwasservorrat ein Vorratsbecken (20) umfasst, das oben nach außen offen ist und eine Wassermenge enthält, die während einer normalen Versorgung des Ansaugbeckens (2) mit Wasser durch den mindestens einen Ansaugtunnel (3) im Wesentlichen unverändert bleibt, und wobei mindestens eine kalibrierte Öffnung (26) in das Vorratsbecken (20) mündet, um die begrenzte Wassermenge (I$_p$) darin aufzunehmen.

**Claims**

**1.** A water intake installation for at least one heat exchanger-based cooling circuit of a nuclear power plant, comprising:

a suction basin from which at least one pumping station of the plant is able to draw water in order to circulate it within one said cooling circuit; and

at least one suction tunnel connected to at least one main water intake submerged in a body of water, said suction tunnel being able to supply the suction basin with water so as to maintain a water level in the suction basin that is sufficient for the operation of said at least one pumping station;

wherein the water intake installation further comprises a system for supplying additional water distinct from said at least one suction tunnel and capable of supplying water to the suction basin from at least one emergency water reserve, said system for supplying additional water comprising at least one water duct connecting the suction basin to said emergency water reserve and an obstructing device closing off said water duct, the obstructing device being able to open said water duct at least partially if the water level in the suction basin drops in a manner defined beforehand as abnormal, so that the suction basin is supplied with water by said system for supplying additional water if the water supplied by said at least one suction tunnel becomes insufficient.

**2.** The water intake installation according to claim 1, wherein said body of water constitutes one said emergency water reserve.

**3.** The water intake installation according to claim 2, wherein said body of water is a sea, and said system for supplying additional water is arranged between the suction basin and a portion of a channel which communicates with the sea.

**4.** The water intake installation according to claim 2, wherein said system for supplying additional water comprises a backup tunnel connected to at least one backup water intake submerged in said body of water, said backup water intake being placed at a height at least ten meters above one said main water intake.

**5.** The water intake installation according to claim 1, wherein one said at least one emergency water reserve comprises a reserve basin containing a volume of water which remains substantially unchanged when water is being supplied normally to the suction basin by said at least one suction tunnel.

**6.** The water intake installation according to claim 1, wherein said at least one main water intake is placed at a certain depth relative to a mean reference level of said body of water, said depth being determined such that the water flowing into the suction basin has, during at least one period of the year, a maximum temperature at least 4°C lower than the maximum temperature of the water at the surface of said body of water.

7. The water intake installation according to claim 1, wherein said obstructing device comprises an obstructing member able to pivot about a pivot shaft in order to open said water duct.

8. The water intake installation according to claim 7, wherein said obstructing device is adapted so that the pivoting of said obstructing member occurs autonomously according to a drop in the water level in the suction basin.

9. The water intake installation according to claim 7, wherein the pivoting of said obstructing member is actuated by a trigger device connected to a control system able to generate a trigger command for the trigger device, the control system being associated with an analysis system receiving data provided by a device for measuring the water level in the suction basin, said analysis system being able to determine whether the water level in the suction basin is dropping in a manner defined beforehand as abnormal.

10. The water intake installation according to claim 9, wherein said obstructing device is adapted so that the pivoting of said obstructing member occurs autonomously according to a drop in the water level in the suction basin and wherein said trigger device is adapted to allow the pivoting of said obstructing member to be performed autonomously by said obstructing device if the trigger device does not perform its function.

11. The water intake installation according to claim 8, wherein said obstructing member pivots to open said water duct when a height difference between the water level in the emergency water reserve and the water level in the suction basin exceeds a predetermined threshold.

12. The water intake installation according to claim 8, wherein said obstructing device comprises a counterweight means arranged on a side opposite the obstructing member relative to said pivot shaft, said counterweight means comprising a main counterweight member located at a fixed distanced from said pivot shaft, and said main counterweight member weighing between 80% and 200% of the weight of said obstructing member.

13. The water intake installation according to claim 8, wherein said obstructing member comprises a float device arranged so that it is fully submerged in water when water is being supplied normally by said at least one suction tunnel and so that it is at least partially exposed if the water level in the suction basin falls below a predetermined level of lowest tide to reach a predetermined trigger level, said float device being adapted to cause said obstructing member to pivot when said trigger level is reached.

14. A nuclear power plant comprising the water intake installation according to claim 1, wherein the suction basin is covered by a device forming a substantially watertight cover, and at least one calibrated opening is made in the cover device or nearby to allow a limited flow of water to outside the suction basin if the suction basin overflows due to an unusual rise in said body of water, the nuclear power plant further comprising at least one discharge shaft feeding water to an outflow tunnel, said discharge shaft also being provided with a cover device having at least one calibrated opening to allow a limited flow of water to the outside in case of overflow of the discharge shaft.

15. The nuclear power plant according to claim 14, wherein one said emergency water reserve comprises a reserve basin having its top open to the outside and containing a volume of water that remains substantially unchanged when water is being supplied normally to the suction basin by said at least one suction tunnel, and wherein said at least one calibrated opening leads to said reserve basin to allow collecting said limited flow of water therein.

FIG. 1

# FIG. 2

EP 2 948 959 B1

# FIG. 3

FIG. 4

FIG. 5

# FIG. 6

# FIG. 7

# FIG. 8

# FIG. 9

# FIG. 10

# FIG. 15

# FIG. 16

FIG. 11

FIG. 12

FIG. 13

FIG. 14

FIG. 17

EP 2 948 959 B1

## FIG. 18

## FIG. 19

FIG. 20

EP 2 948 959 B1

# FIG. 21

EP 2 948 959 B1

FIG. 22

FIG. 23

# FIG. 24

# FIG. 25

EP 2 948 959 B1

FIG. 26

FIG. 27

FIG. 28

FIG. 29

FIG. 30

FIG. 31

FIG. 32

EP 2 948 959 B1

**RÉFÉRENCES CITÉES DANS LA DESCRIPTION**

**Documents brevets cités dans la description**

- JP 60111089 A

- JP 2000170138 A